# EUROPEAN PATENT APPLICATION

(11) **EP 4 486 017 A1**
(43) Date of publication of application: **01.01.2025**
(21) Application number: 23773566.7
(22) Date of filing: 27.02.2023
(51) Int. Cl.: H04W 52/02

(54) **COMMUNICATION METHOD AND APPARATUS**

(30) Priority: 23.03.2022 CN 202210291249; 29.03.2022 CN 202210323888
(71) Applicant: Huawei Technologies Co., Ltd., Shenzhen, Guangdong 518129 (CN)
(72) Inventor: HUANG, Guogang, Shenzhen, Guangdong 518129 (CN)
(74) Representative: Körber, Martin Hans
(86) International application number: PCT/CN2023/078455
(87) International publication number: WO 2023/179315

(57) **Abstract**

A communication method and apparatus are provided, to reduce power consumption of a multi-link device. In the method, an access point multi-link device generates a first physical layer protocol data unit PPDU, where the first PPDU carries first indication information, and the first indication information indicates that waking up of a first access point in a doze state is allowed, or the first indication information indicates that waking up of a first access point in a doze state is not allowed; and the access point multi-link device sends the first PPDU through the first access point. This application is applied to a wireless local area network system that supports IEEE 802.11ax next-generation Wi-Fi protocols, for example, 802.11 series protocols such as 802.11be or EHT.

## Description

### CROSS-REFERENCE TO RELATED APPLICATIONS

This application claims priority to Chinese Patent Application No. 202210291249.7, filed with the China National Intellectual Property Administration on March 23, 2022 and entitled "COMMUNICATION METHOD AND APPARATUS", and to Chinese Patent Application No. 202210323888.7, filed with the China National Intellectual Property Administration on March 29, 2022 and entitled "COMMUNICATION METHOD AND APPARATUS", both of which are incorporated herein by reference in their entireties.

### TECHNICAL FIELD

This application relates to the field of wireless communication technologies, and in particular, to a communication method and apparatus.

### BACKGROUND

According to a stipulation of the Institute of Electrical and Electronics Engineers (Institute of Electrical and Electronics Engineers, IEEE) 802.11be draft (Draft), a multicast data frame needs to be replicated and sent on all links of an access point (access point, AP) multi-link device (multi-link device, MLD), and a multicast management frame needs to be independently sent on a corresponding link of the AP MLD.

However, in this manner of sending the multicast data frame and the multicast management frame, all the links of the AP MLD need to wake up periodically to receive the multicast data frame and the multicast management frame buffered on an AP side, which is not conducive to power saving of the AP MLD. Therefore, it is proposed in the related technology that an AP in the AP MLD may switch to a doze (Doze) state, and a wakeup request may be sent to wake up the AP in the doze state.

However, when a battery level is extremely low, an NSTR mobile AP MLD may not expect an AP of the NSTR mobile AP MLD to be woken up. Consequently, control on the AP MLD in the related technology is not flexible enough.

### SUMMARY

This application provides a communication method and apparatus, to improve flexibility of controlling an access point multi-link device.

According to a first aspect, a communication method is provided, including the following processes: An access point multi-link device generates a first physical layer protocol data unit (physical layer protocol data unit, PPDU), where the first PPDU carries first indication information, and the first indication information indicates that waking up of a first access point in a doze state is allowed, or the first indication information indicates that waking up of a first access point in a doze state is not allowed; and the access point multi-link device sends the first PPDU.

A power state of the first access point may include an awake state and a doze state. The first access point may receive and send message packets in the awake state. To be specific, the access point multi-link device may receive and send message packets through the first access point in the awake state. The first access point cannot receive or send message packets in the doze state. To be specific, the access point multi-link device cannot receive or send message packets through the first access point in the doze state, to reduce power consumption of the access point multi-link device to which the first access point belongs.

Optionally, a default state of a power save mode is the doze state. In other words, the first access point is in the doze state by default in the power save mode. Specifically, the first indication information may indicate that waking up of the first access point in the power save mode is allowed, or the first indication information may indicate that waking up of the first access point in the power save mode is not allowed.

In the method, when the first access point in the access point multi-link device is in the doze state, the access point multi-link device may indicate, by using the first indication information of the first PPDU, whether to allow waking up of the first access point in the doze state. If the first indication information indicates that waking up of the first access point in the doze state is allowed, the first access point may be woken up. If the first indication information indicates that waking up of the first access point in the doze state is not allowed, the first access point may keep in the doze state. Therefore, flexibility of controlling the AP MLD can be improved.

The access point multi-link device includes one or more access points. Generally, at least one access point in the one or more access points is configured to receive and send message packets (for example, a control frame and/or a data frame). For example, the access point multi-link device includes the first access point and a second access point, and there may be one or more first access points. The first access point is in the doze state (or the power save mode, where the default state in the power save mode is the doze state), and the second access point is in an awake state (or an active mode, where the second access point is always in the awake state in the active mode).

For example, the method may be implemented through interaction between the access point multi-link device and a station multi-link device. For example, the access point multi-link device sends the first PPDU to the station multi-link device. If the first access point is in the doze state (or the power save mode), the access point multi-link device sends the first PPDU to the station multi-link device through the second access point, where the second access point is in the awake state.

In a possible implementation, the first indication information includes a wake-up enable field, and the wake-up enable field indicates that waking up of the first access point in the doze state is allowed, or that waking up of the first access point in the doze state is not allowed.

The wake-up enable field may occupy one or more bits.

For example, the wake-up enable field is added to a reduced neighbor report element, and the wake-up enable field occupies 1 bit. When the 1 bit is set to 1, it indicates that waking up of the first access point in the doze state is allowed. When the 1 bit is set to 0, it indicates that waking up of the first access point in the doze state is not allowed.

Optionally, the wake-up enable field indicates that waking up of the first access point in the power save mode is allowed, or that waking up of the first access point in the power save mode is not allowed, and the default state of the power save mode is the doze state.

In a possible implementation, the first indication information includes a power management mode field, and the power management mode field indicates a power management mode of the first access point.

The power management mode field may occupy a plurality of bits.

For example, the power management mode field is added to the reduced neighbor report element, and the power management mode field occupies 2 bits, and indicates the power management mode of the first access point. In some power management modes, state switching of the first access point is allowed. For example, in the power management mode, the first access point in the doze state is allowed to be woken up. In some power management modes, state switching of the first access point is not allowed. For example, in the power management mode, the first access point in the doze state is not allowed to be woken up.

In a possible implementation, when the power management mode field is set to a first value, it indicates that the first access point is in an active mode. In this case, the first access point keeps in the awake state, and state switching is not allowed.

In a possible implementation, when the power management mode field is set to a second value, it indicates that the first access point is in the power save mode, and state switching is allowed (for example, switching from the doze state to the awake state or switching from the awake state to the doze state). In this case, the default state of the first access point is the doze state, and based on a specific condition, the first access point switches from the doze state to the awake state, or switches from the awake state to the doze state.

For example, a condition for switching from the doze state to the awake state includes but is not limited to one or more of the following: determining that there is data to be sent or received, receiving a wakeup request, periodic waking up, or the like; and a condition for switching from the awake state to the doze state includes but is not limited to one or more of the following: determining that there is no data to be sent or received, receiving indication information that indicates dozing, periodic dozing, or the like.

In a possible implementation, when the power management mode field is set to a third value, it indicates that the first access point is in a sleep mode. In this case, the first access point keeps in the doze state, state switching is not allowed, and the first access point is not allowed to be woken up.

In a possible implementation, when the first indication information indicates that waking up of the first access point in the doze state is allowed, the station multi-link device may determine whether to wake up the first access point. For example, the station multi-link device may determine to wake up the first access point when there is to-be-transmitted data, or determine not to wake up the first access point when there is no to-be-transmitted data.

If determining to wake up the first access point, the station multi-link device may wake up the first access point by sending a second PPDU. For example, after the access point multi-link device sends the first PPDU, the access point multi-link device may further receive the second PPDU sent by the station multi-link device, where the second PPDU carries second indication information, and the second indication information is used to wake up a first access point corresponding to one or more links.

After receiving the second PPDU, the access point multi-link device may wake up the first access point corresponding to the one or more links. Generally, one link corresponds to one access point.

Optionally, when there is data to be transmitted between a plurality of station multi-link devices and the access point multi-link device, the access point multi-link device may receive second PPDUs sent by the plurality of station multi-link devices.

The second PPDU may reuse an existing frame structure, or may be of a newly defined frame structure.

In this implementation, when the first access point is allowed to be woken up, the access point multi-link device wakes up the first access point based on indication information sent by the station multi-link device, so that power save can be further implemented, and control flexibility can be ensured.

In a possible implementation, the second indication information includes a link indication field, and the link indication field indicates a link that is requested to be woken up. In this implementation, the link indication field indicates the link that is requested to be woken up, to request to wake up a first access point corresponding to the link.

For example, the link indication field may be a link bitmap (Link Bitmap) field.

In a possible implementation, the second PPDU includes a control field, the second indication information is carried in the control field, and the control field indicates a link that is requested to be woken up. In this implementation, the control field indicates the link that is requested to be woken up, to request to wake up a first access point corresponding to the link.

For example, the control field may be an access point assistance request control field, and the access point assistance request control field carries the second indication information.

In a possible implementation, the access point assistance request control field further carries third indication information, and the third indication information indicates that the access point assistance request control field is used to wake up a first access point (in a doze state) in a specified access point multi-link device.

In the related technology, the access point assistance request control field is used to request the access point multi-link device to send a trigger (Trigger) frame on a corresponding link. Therefore, to distinguish from a meaning indicated in the related technology, in this implementation, the third indication information may indicate that the access point assistance request control field is used to wake up the first access point, to implement control accuracy.

In a possible implementation, the access point multi-link device sends a third PPDU to the station multi-link device, where the third PPDU indicates a first access point that is finally successfully woken up. In this implementation, after waking up the first access point, the access point multi-link device may notify the station multi-link device of the woken-up first access point.

Optionally, the first access point that is finally woken up and that is indicated by the third PPDU may be a part of or all first access points that the second PPDU requests to wake up.

For example, a frame format of the third PPDU may be the same as or different from a frame format of the second PPDU.

In a possible implementation, the access point multi-link device sends a fourth PPDU to the station multi-link device on a woken-up link, where the fourth PPDU implies that a first access point corresponding to the link is woken up. In this implementation, the access point multi-link device may notify the station multi-link device that the first access point has been woken up.

For example, the fourth PPDU may be a trigger frame or a PS-poll (Poll) frame.

Optionally, an access point that sends the fourth PPDU may be a part of or all the first access points that the second PPDU requests to wake up.

In a possible implementation, the access point multi-link device may receive the wakeup request by default. Optionally, the access point multi-link device indicates a corresponding wakeup delay, to indicate that the first access point switches from the doze state to the awake state after the wakeup delay.

The wakeup delay is related to a time required for the first access point to switch from the doze state to the awake state after the wakeup request received.

For example, the first PPDU includes a wakeup delay field, and the wakeup delay field indicates the delay for the first access point to switch from the doze state to the awake state.

For another example, the access point multi-link device sends a fifth PPDU, where the fifth PPDU includes the wakeup delay field. Correspondingly, the station multi-link device receives the fifth PPDU.

Optionally, the fifth PPDU may further include a power save operation support field, and the power save operation support field indicates whether the wakeup delay field is present.

Optionally, the fifth PPDU may further include a mode switch count field, and the mode switch count field indicates a remaining time for the first access point to switch from a current mode to a target mode. The remaining time may be represented as a number of TBTTs of a corresponding link.

The fifth PPDU may further include a power management information field, and the power management information field carries a wakeup field and the mode switch count field. Optionally, the fifth PPDU may further include seventh indication information, and the seventh indication information indicates whether the power management information field is present.

In some scenarios, when the first access point is in the power save mode, the access point multi-link device may send the fifth PPDU.

In a possible implementation, the first access point in the power save mode receives wakeup requests of one or more station multi-link devices. After receiving the wakeup requests, the first access point that switches from the doze state to the awake state may switch back to the doze state under a specific condition, to reduce power consumption.

For example, the one or more station multi-link devices send fourth indication information on a link on which the first access point is located.

When all the station multi-link devices that send the wakeup requests set fourth indication information of last PPDUs sent by the station multi-link devices to the first access point to 0, the first access point may switch from the awake state to the doze state, to reduce power consumption.

For example, the fourth indication information is a more data field.

For another example, when a channel is in an idle state, the first access point may switch from the awake state to the doze state, to reduce power consumption.

In a possible implementation, the access point multi-link device sends a reduced neighbor report element, where a target beacon transmission time information set field that corresponds to the first access point and that is in the reduced neighbor report element carries only a multi-link device parameters field, and a corresponding target beacon transmission time information length is set to a first length value, so that a legacy station ignores the first access point. In this implementation, the access point multi-link device carries only the multi-link device parameters field, so that the legacy station ignores the first access point (or a first link corresponding to the first access point).

In a possible implementation, the access point multi-link device sends a reduced neighbor report element, where a target beacon transmission time information field type field that corresponds to the first access point and that is in the reduced neighbor report element is set to a fourth value, so that a legacy station ignores the first access point. In this implementation, the access point multi-link device sets the target beacon transmission time information field type field to the fourth value (or sets the target beacon transmission time information field type field to a first type value), so that the legacy station ignores the first access point (or a first link corresponding to the first access point).

In a possible implementation, the access point multi-link device sends a reduced neighbor report element, where a target beacon transmission time information set field that corresponds to the first access point and that is in the reduced neighbor report element carries only a multi-link device parameters field, a corresponding target beacon transmission time information length is set to a first length value, and a corresponding target beacon transmission time information field type field is set to a fourth value, so that a legacy station ignores the first access point. In this implementation, the access point multi-link device carries only the multi-link device parameters field, so that the legacy station ignores the first access point (or a first link corresponding to the first access point).

In a possible implementation, the access point multi-link device sends a sixth PPDU, where the sixth PPDU carries fifth indication information, and the fifth indication information indicates that transmission is allowed out of a restricted target wake time (restricted target wake time, rTWT) service period (service period, SP), or transmission is not allowed out of an rTWT SP. In this implementation, the fifth indication information indicates to forbid data sending and receiving out of the rTWT SP, so that the station multi-link device can be prevented from sending data to the access point multi-link device out of the SP, to further save energy.

For example, the fifth indication information may be a newly added transmission allowed out of TWT SP (Transmission allowed Out of TWT SP) field, and the field may occupy one or more bits.

In a possible implementation, the first PPDU includes a power management mode field, and the power management mode field further indicates a periodic power save mode. In this implementation, in the periodic power save mode, it may be indicated by default that transmission is not allowed out of the rTWT SP, to further save energy.

In a possible implementation, if a TWT protocol is set up between the first access point and a corresponding first station, the first access point of the access point multi-link device switches to the awake state before the TWT SP. In this implementation, the first access point automatically wakes up when being in the power save mode, and the first station does not need to send a wakeup request. The power management mode herein does not need to be set to the periodic power save mode.

According to a second aspect, a communication method is provided, including the following process: A station multi-link device receives a first PPDU, where the first PPDU carries first indication information, and the first indication information indicates that waking up of a first access point in a doze state is allowed, or the first indication information indicates that waking up of a first access point in a doze state is not allowed; and the station multi-link device determines whether to wake up the first access point.

For example, when there is data to be sent or received, the station multi-link device determines to wake up the first access point; or when there is no data to be sent or received, the station multi-link device determines not to wake up the first access point.

In a possible implementation, the first indication information includes a wake-up enable field, and the wake-up enable field indicates that waking up of the first access point in the doze state is allowed, or that waking up of the first access point in the doze state is not allowed.

In a possible implementation, the first indication information includes a power management mode field, and the power management mode field indicates a power management mode of the first access point.

In a possible implementation, when the power management mode field is a first value, it indicates that the first access point operates in an active mode, a state of the first access point keeps in an awake state, and state switching is not allowed.

In a possible implementation, when the power management mode field is a second value, it indicates that the first access point operates in a power save mode, and state switching is allowed. For example, after receiving a wakeup request, the first access point switches from the doze state to the awake state, and switches from the awake state back to the doze state when a specific condition is met.

In a possible implementation, when the power management mode field is a third value, it indicates that the first access point operates in a sleep mode, and a state of the first access point keeps in the doze state, state switching is not allowed, and the first access point is not allowed to be woken up.

In a possible implementation, the first indication information indicates that the first access point in the doze state is allowed to be woken up.

After the station multi-link device determines whether to allow waking up of the first access point, the station multi-link device may further send a second PPDU, where the second PPDU carries second indication information, and the second indication information is used to wake up a first access point corresponding to one or more links.

In a possible implementation, the station multi-link device may further receive a seventh PPDU sent by an access point multi-link device, where the seventh PPDU carries sixth indication information, and the sixth indication information is used to wake up the first station corresponding to the one or more links.

In a possible implementation, the second indication information or the sixth indication information includes a link indication field, and the link indication field indicates a link that is requested to be woken.

In a possible implementation, the second PPDU or the seventh PPDU includes a control field, and the second indication information or the sixth indication information is carried in the control field.

In a possible implementation, the control field is an access point assistance request control field, and the access point assistance request control field carries the second indication information or the sixth indication information.

In a possible implementation, the access point assistance request control field further carries third indication information, and the third indication information indicates that the access point assistance request control field is used to wake up a first access point that is in a doze state and that is in a specified access point multi-link device.

In a possible implementation, the station multi-link device receives a third PPDU, where the third PPDU indicates the woken-up first access point.

In a possible implementation, the station multi-link device receives a fourth PPDU on a woken-up link, where the fourth PPDU indicates that a first access point corresponding to the link is woken up.

In a possible implementation, the first PPDU includes a wakeup delay field, and the wakeup delay field indicates a delay for the first access point to switch from the doze state to the awake state.

In a possible implementation, the station multi-link device receives a fifth PPDU, where the fifth PPDU includes the wakeup delay field.

In a possible implementation, the fifth PPDU may further include a power save operation support field, and the power save operation support field indicates whether the wakeup delay field is present.

In a possible implementation, the first access point that is in the power save mode is woken up by one or more station multi-link devices. The station multi-link device may further send fourth indication information, and the fourth indication information is set to 0, to indicate that a station corresponding to the first access point has no to-be-transmitted data, so that the first access point of the access point multi-link device switches back to the doze state, to reduce power consumption.

In a possible implementation, the fourth indication information is information indicated by a more data field.

In a possible implementation, the station multi-link device receives a reduced neighbor report element, where a target beacon transmission time information set field that corresponds to the first access point and that is in the reduced neighbor report element carries a multi-link device parameters field, and a target beacon transmission time information length is set to a first length value, so that a legacy station ignores the first access point.

In a possible implementation, the station multi-link device receives a reduced neighbor report element, where a target beacon transmission time information field type that corresponds to the first access point and that is in the reduced neighbor report element is set to a first type value, so that a legacy station ignores the first access point.

In a possible implementation, the station multi-link device receives a reduced neighbor report element, where a target beacon transmission time information set field that corresponds to the first access point and that is in the reduced neighbor report element carries a multi-link device parameters field, a target beacon transmission time information length is set to a first length value, and a corresponding target beacon transmission time information field type is set to a first type value, so that a legacy station ignores the first access point.

According to a third aspect, a communication apparatus is provided. The communication apparatus may be the foregoing access point multi-link device or station multi-link device, or may be a chip disposed in the access point multi-link device or the station multi-link device. The communication apparatus may implement the method in any one of the foregoing aspects.

The communication apparatus includes a processing unit and a transceiver unit.

When the communication apparatus is an access point multi-link device, for example, the processing unit is configured to generate a first PPDU, where the first PPDU carries first indication information, and the first indication information indicates that waking up of a first access point in a doze state is allowed, or the first indication information indicates that waking up of a first access point in a doze state is not allowed; and the transceiver unit is configured to send the first PPDU.

In a possible implementation, the first indication information includes a wake-up enable field, and the wake-up enable field indicates that waking up of the first access point in the doze state is allowed, or that waking up of the first access point in the doze state is not allowed.

In a possible implementation, the first indication information includes a power management mode field, and the power management mode field indicates that waking up of the first access point in the doze state is allowed, or that waking up of the first access point in the doze state is not allowed.

In a possible implementation, the power management mode field further indicates that the first access point is in an active mode, and/or the power management mode field further indicates that the first access point is in a sleep mode.

In a possible implementation, the first indication information indicates that the first access point in the doze state is allowed to be woken up.

The transceiver unit is further configured to receive a second PPDU sent by a station multi-link device, where the second PPDU carries second indication information, and the second indication information is used to wake up a first access point corresponding to one or more links.

In a possible implementation, the second indication information includes a link indication field, and the link indication field indicates a link that is requested to be woken up; or the second indication information includes identifiers of a plurality of station multi-link devices and a link indication field corresponding to an identifier of each station multi-link device; or the second indication information is carried in a control field, and the control field indicates a link that is requested to be woken up.

In a possible implementation, the plurality of station multi-link devices correspond to a same multicast address or a same broadcast address.

In a possible implementation, the second PPDU includes a control field, and the control field carries the second indication information.

In a possible implementation, the control field is an access point assistance request control field, and the access point assistance request control field carries the second indication information.

In a possible implementation, the access point assistance request control field carries third indication information, and the third indication information indicates that the access point assistance request control field is used to wake up a first access point in a specified access point multi-link device.

In a possible implementation, the transceiver unit is further configured to send a third PPDU to the station multi-link device, where the third PPDU indicates a woken-up first access point.

In a possible implementation, the transceiver unit is further configured to send a fourth PPDU to the station multi-link device on a woken-up link, where the fourth PPDU indicates that a first access point corresponding to the link is woken up.

In a possible implementation, the first PPDU includes a wakeup delay field, and the wakeup delay field indicates a delay for the first access point to switch from the doze state to the awake state.

In a possible implementation, the transceiver unit is further configured to send a fifth PPDU, where the fifth PPDU includes the wakeup delay field.

In a possible implementation, the fifth PPDU further includes a power save operation support field, and the power save operation support field indicates whether the wakeup delay field is present.

In a possible implementation, the first access point that is in the power save mode is woken up by one or more station multi-link devices.

The processing unit is further configured to: if fourth indication information sent by one or more station multi-link devices is received, and the fourth indication information is set to 0, switch the first access point from the awake state to the doze state.

In a possible implementation, the fourth indication information is information indicated by a more data field.

In a possible implementation, the processing unit is further configured to: if a channel is in an idle state, switch the first access point from the awake state to the doze state.

In a possible implementation, the transceiver unit is further configured to send a reduced neighbor report element, where a target beacon transmission time information set field that corresponds to the first access point and that is in the reduced neighbor report element carries a multi-link device parameters field, and a target beacon transmission time information length is set to a first length value, so that a legacy station ignores the first access point.

In a possible implementation, the transceiver unit is further configured to send a reduced neighbor report element, where a target beacon transmission time information field type that corresponds to the first access point and that is in the reduced neighbor report element is set to a first type value, so that a legacy station ignores the first access point.

In a possible implementation, the transceiver unit is further configured to send a sixth PPDU, where the sixth PPDU carries fifth indication information, and the fifth indication information indicates that transmission is allowed out of a service period, or that transmission is not allowed out of a service period.

In a possible implementation, the first PPDU includes a power management mode field, and the power management mode field further indicates a periodic power save mode.

When the communication apparatus is a station multi-link device, for example, the transceiver unit is configured to receive a first physical layer protocol data unit PPDU, where the first PPDU carries first indication information, and the first indication information indicates that waking up of a first access point in a doze state is allowed, or the first indication information indicates that waking up of a first access point in a doze state is not allowed; and the processing unit is configured to determine whether to wake up the first access point.

In a possible implementation, the first indication information includes a wake-up enable field, and the wake-up enable field indicates that waking up of the first access point in the doze state is allowed, or that waking up of the first access point in the doze state is not allowed.

In a possible implementation, the first indication information includes a power management mode field, and the power management mode field indicates that waking up of the first access point in the doze state is allowed, or that waking up of the first access point in the doze state is not allowed.

In a possible implementation, the power management mode field further indicates the first access point to switch to an awake mode, and/or the power management mode field further indicates the first access point to switch to a doze mode.

In a possible implementation, the first indication information indicates that the first access point in the doze state is allowed to be woken up.

The transceiver unit is further configured to send a second PPDU, where the second PPDU carries second indication information, and the second indication information is used to wake up a first access point corresponding to one or more links.

In a possible implementation, the second indication information includes a link indication field, and the link indication field indicates a link that is requested to be woken up; or the second indication information includes identifiers of a plurality of station multi-link devices and a link indication field corresponding to an identifier of each station multi-link device; or the second indication information is carried in a control field, and the control field indicates a link that is requested to be woken up.

In a possible implementation, the plurality of station multi-link devices correspond to a same multicast address or a same broadcast address.

In a possible implementation, the second PPDU includes a control field, and the control field carries the second indication information.

In a possible implementation, the control field is an access point assistance request control field, and the access point assistance request control field carries the second indication information.

In a possible implementation, the access point assistance request control field further carries third indication information, and the third indication information indicates that the access point assistance request control field is used to wake up a first access point in a specified access point multi-link device.

In a possible implementation, the transceiver unit is further configured to receive a third PPDU, where the third PPDU indicates a woken-up first access point.

In a possible implementation, the transceiver unit is further configured to receive a fourth PPDU on a woken-up link, where the fourth PPDU indicates that a first access point corresponding to the link is woken up.

In a possible implementation, the first PPDU includes a wakeup delay field, and the wakeup delay field indicates a delay for the first access point to switch from the doze state to the awake state.

In a possible implementation, the transceiver unit is further configured to receive a fifth PPDU, where the fifth PPDU includes the wakeup delay field.

In a possible implementation, the fifth PPDU further includes a power save operation support field, and the power save operation support field indicates whether the wakeup delay field is present.

In a possible implementation, the first access point that is in a power save mode is woken up by one or more station multi-link devices; and the transceiver unit is further configured to send fourth indication information, where the fourth indication information is set to 0, and indicates that a corresponding station has no to-be-transmitted data.

In a possible implementation, the fourth indication information is information indicated by a more data field.

In a possible implementation, the transceiver unit is further configured to: receive a reduced neighbor report element, where a target beacon transmission time information set field that corresponds to the first access point and that is in the reduced neighbor report element carries a multi-link device parameters field, and a target beacon transmission time information length is set to a first length value, so that a legacy station ignores the first access point; or receive a reduced neighbor report element, where a target beacon transmission time information field type that corresponds to the first access point and that is in the reduced neighbor report element is set to a first type value, so that a legacy station ignores the first access point.

In a possible implementation, the transceiver unit is further configured to receive a sixth PPDU, where the sixth PPDU carries fifth indication information, and the fifth indication information indicates that transmission is allowed out of a service period, or that transmission is not allowed out of a service period.

In a possible implementation, the first PPDU includes a power management mode field, and the power management mode field further indicates a periodic power save mode.

According to a fourth aspect, a communication apparatus is provided, including a processor, configured to perform the method in any one of the foregoing aspects.

Optionally, the apparatus further includes a memory, the memory stores instructions, and the processor executes the instructions in the memory, so that the method in any one of the foregoing aspects is performed.

Optionally, the memory is located inside or outside the apparatus.

Optionally, the apparatus further includes an interface circuit, and the processor is coupled to the interface circuit.

Optionally, there are one or more processors, and there are one or more memories.

Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner of disposing the memory and the processor are not limited in embodiments of this application.

The communication apparatus may be a chip, and the processor may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated in the processor, or may be located outside the processor and exist independently.

According to a fifth aspect, a processor is provided, including an input circuit, an output circuit, and a processing circuit. The processing circuit is configured to receive a signal through the input circuit, and transmit a signal through the output circuit, so that the processor performs the method in any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver. A signal output by the output circuit may be, for example, but not limited to, output to and transmitted by the transmitter. The input circuit and the output circuit may be a same circuit, and the circuit is configured as the input circuit and the output circuit at different moments. Specific implementations of the processor and various circuits are not limited in embodiments of this application.

According to a sixth aspect, a computer program product is provided. The computer program product includes a computer program (which may also be referred to as code or instructions), and when the computer program is run, a computer is enabled to perform the method in any one of the foregoing aspects.

According to a seventh aspect, a computer-readable medium is provided. The computer-readable medium stores a computer program (which may also be referred to as code or instructions). When the computer program is run on a computer, the computer is enabled to perform the method in any one of the foregoing aspects.

According to an eighth aspect, a chip system is provided. The chip system includes a processor and an interface, configured to support a communication apparatus in implementing functions in any one of the foregoing aspects. In a possible design, the chip system further includes a memory. The memory is configured to store necessary information and data of the communication apparatus. The chip system may include a chip, or may include a chip and another discrete component.

According to a ninth aspect, a functional entity is provided. The functional entity is configured to implement the method in any one of the foregoing aspects.

According to a tenth aspect, a communication system is provided, including the access point multi-link device according to the first aspect and the station multi-link device according to the second aspect.

For technical effects brought by any one of the implementations in the second aspect to the tenth aspect, refer to technical effects brought by the first aspect. Details are not described again.

It should be noted that the communication methods provided in the first aspect and the second aspect may be used separately, or may be used in combination. This is not limited herein.

### BRIEF DESCRIPTION OF DRAWINGS

FIG. 1 is a diagram of a multi-link device;
FIG. 2 is a diagram of a structure of a communication system;
FIG. 3 is a diagram of a structure of a communication system;
FIG. 4 is a diagram of a communication process according to an embodiment of this application;
FIG. 5 is a diagram of a frame structure of a reduced neighbor report element according to an embodiment of this application;
FIG. 6 is a diagram of a frame structure of a reduced neighbor report element according to an embodiment of this application;
FIG. 7A is a diagram of a frame structure of a reduced neighbor report element according to an embodiment of this application;
FIG. 7B is a diagram of a frame structure of a reduced neighbor report element according to an embodiment of this application;
FIG. 8 is a diagram of a format of an access point assistance request control field according to an embodiment of this application;
FIG. 9 is a diagram of a format of an access point assistance request control field according to an embodiment of this application;
FIG. 10 is a diagram of a unicast TWT according to an embodiment of this application;
FIG. 11 is a diagram of a format of a broadcast TWT element according to an embodiment of this application;
FIG. 12 is a diagram of a frame structure of a multi-link element (Multi-link Element) according to an embodiment of this application;
FIG. 13A is a diagram of a format of a presence bitmap (Presence Bitmap) field according to an embodiment of this application;
FIG. 13B is a diagram of a format of a multi-link control (Multi-Link Control) field according to an embodiment of this application;
FIG. 13C is a diagram of a format of a power management information (Power Management Information) field according to an embodiment of this application;
FIG. 13D is a diagram of a format of a common info field according to an embodiment of this application;
FIG. 13E is a diagram of a format of a STA info field according to an embodiment of this application;
FIG. 13F is a diagram of a format of a STA control field according to an embodiment of this application;
FIG. 14 is a diagram of a frame structure of a reduced neighbor report element according to an embodiment of this application;
FIG. 15 is a diagram of a frame structure of a target beacon transmission time (Target beacon transmission Time, TBTT) information field according to an embodiment of this application;
FIG. 16 is a diagram of a frame structure of a basic service set parameter (BSS Parameter) field according to an embodiment of this application;
FIG. 17 is a diagram of a structure of a communication apparatus according to an embodiment of this application;
FIG. 18 is a diagram of a structure of a communication apparatus according to an embodiment of this application; and
FIG. 19 is a diagram of a structure of a communication apparatus according to an embodiment of this application.

### DESCRIPTION OF EMBODIMENTS

The following describes the technical solutions of this application with reference to accompanying drawings.

The technical solutions in embodiments of this application may be applied to various communication systems, for example, a wireless local area network (wireless local area network, WLAN) communication system, a long term evolution (long term evolution, LTE) system, and an LTE frequency division duplex (frequency division duplex, FDD) system, an LTE time division duplex (time division duplex, TDD) system, a 5th generation (5th generation, 5G) system, new radio (new radio, NR), a future 6th generation (6th generation, 6G) system, and the like.

For example, embodiments of this application may be applied to a WLAN system, and any protocol in IEEE 802.11 series protocols used by a WLAN, such as 802.11a/b/g, 802.11n, 802.11ac, 802.11ax, 802.11be, 802.11bf, and a future 802.11 protocol, are applicable to embodiments of this application. The methods provided in this application may be implemented by a communication device in a wireless communication system or a chip or a processor in the communication device. Correspondingly, the communication device supports communication via IEEE 802.11 series protocols. Although embodiments of this application are mainly described by using a network deployed with IEEE 802.11 as an example, persons skilled in the art easily understand that aspects in this application may be extended to other networks using various standards or protocols, for example, Bluetooth (Bluetooth), a high performance radio local area network (local area network, LAN) (high performance radio LAN, HIPERLAN) (a wireless standard similar to the IEEE 802.11 standard, mainly used in Europe), a wide area network (wide area network, WAN), a wireless local area network (WLAN), a personal area network (personal area network, PAN), or another network that is known or developed later. Therefore, regardless of used coverage and a used wireless access protocol, various aspects provided in this application are applicable to any appropriate wireless network.

The WLAN may operate in a low frequency band and a high frequency band. The low frequency band includes sub 1 gigabithertz (GHz), 2.4 GHz, 5 GHz, 6 GHz, and the like, and the high frequency band includes 60 GHz and the like. Although 802.11ax (Wi-Fi 6) and earlier multi-band wireless fidelity (wireless fidelity, Wi-Fi) are configured with a plurality of links, each link usually sets up a different basic service set (basic service set, BSS), and communication can be performed, on only one link at one moment, with a station in a BSS to which the link belongs. Operations on the links lack sufficient cooperation.

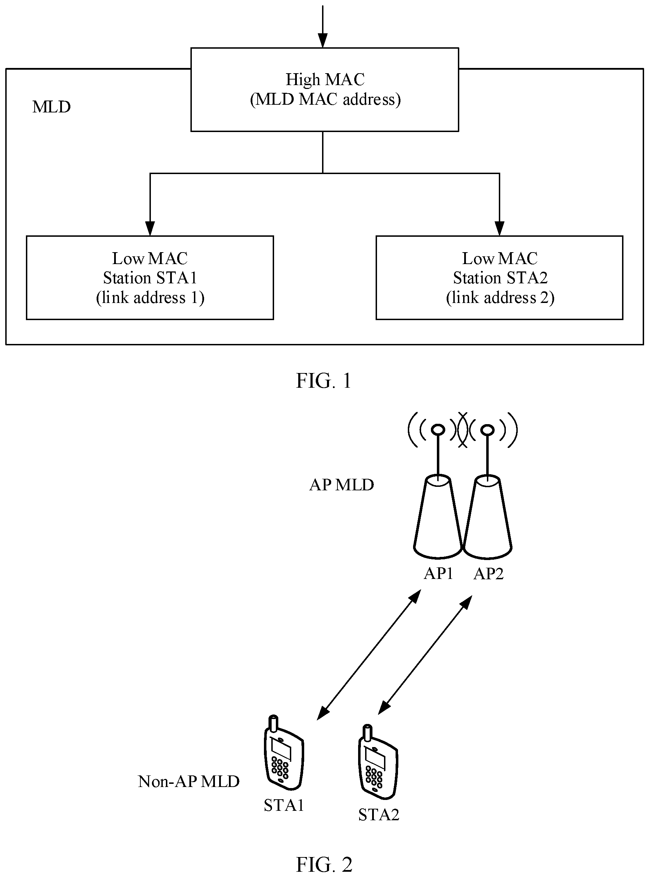

In the IEEE 802.11 next-generation Wi-Fi extremely high throughput (extremely high throughput, EHT) protocol, an ultra-large bandwidth on the new 6 GHz frequency band is used to transmit information packets, and a plurality of discontinuous links may also be aggregated to form an ultra-large bandwidth by using a multi-link cooperation technology. A device that can implement the multi-link cooperation technology is referred to as a multi-link device (multi-link device, MLD). The MLD includes an access point (access point, AP) MLD and/or a non-AP (non-AP) MLD. For example, the non-AP MLD may be a station (station, STA) MLD. The MLD may have a plurality of radio frequency modules operating on different frequency bands, channels, or links (links). For example, a frequency band on which the MLD operates may be all or a part of the sub 1 GHz, 2.4 GHz, 5 GHz, 6 GHz, and a high frequency 60 GHz. This is not limited herein. The MLD includes one or more affiliated (affiliated) stations, where the stations may be APs or STAs. Each affiliated station has its own media access control (media access control, MAC) address (address). As shown in FIG. 1, a STA1 has its own low (low) MAC address, namely, a link address 1, and a STA2 has its own low MAC address, namely, a link address 2. The MLD further has a high (high) MAC address, namely, an MLD MAC address.

The MLD may aggregate larger bandwidths, and may further use the multi-link cooperation technology, for example, sharing of MAC layers on a plurality of links, to flexibly transmit message packets, or simultaneously send message packets of a same service to a same station. The AP MLD may set up association with the non-AP MLD on one link, to quickly implement association setup on a plurality of links.

FIG. 2 is a diagram of an architecture of a communication system to which embodiments of this application are applicable. The communication system includes one or more AP MLDs and one or more non-AP MLDs. The AP MLD includes an AP1 and an AP2, and the non-AP MLD includes a STA1 and a STA2. Optionally, the communication system may further include one or more legacy (Legacy) STAs. The communication system shown in embodiments of this application is merely an example for description, and a communication system to which this application is applicable is not limited thereto. This is uniformly described herein, and details are not described below again.

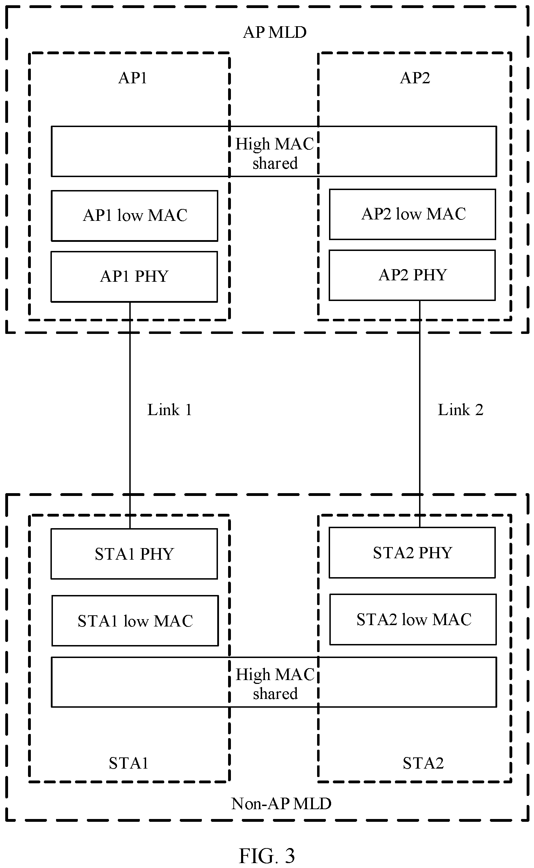

As shown in FIG. 3, the AP MLD includes the AP1 and the AP2. The AP1 includes an AP1 PHY, AP1 low MAC, and high MAC. The AP2 includes an AP2 PHY, AP2 low MAC, and the high MAC. The AP1 and the AP2 share the high MAC. The non-AP MLD includes the STA1 and the STA2. The STA1 includes a STA1 PHY, STA1 low MAC, and high MAC. The STA2 includes a STA2 PHY, STA2 low MAC, and the high MAC. The STA1 and the STA2 share the high MAC, the AP1 and the STA1 are connected through a link (link) 1, and the AP2 and the STA2 are connected through a link 2.

When a plurality of links are set up, the non-AP MLD sends an association request (Association Request) frame on the link 1, and the association request frame carries STA-side information of the link 1 and STA-side information of the link 2. The association request frame may carry a multi-link element (Multi-link Element), and the multi-link element is used to carry information about the MLD and information about the stations in the MLD. The AP MLD sends an association response (Association Response) frame on the link 1, and the association response frame carries AP-side information of the link 1 and AP-side information of the link 2. In this way, the STA1 and the STA2 of the non-AP MLD set up association with the AP1 and the AP2 of the AP MLD respectively. A link (the link 1) used for exchanging association request/response frames is referred to as a transmitted link (Transmitted Link), and another link (the link 2) is referred to as a non-transmitted link (Non-transmitted Link).

Before a plurality of links are set up, a STA may discover presence of an AP in a scanning manner of active scanning or passive scanning, to associate with the AP to set up a connection, so as to implement setup of the plurality of links. It is simply understood that a purpose of associating the STA with the AP to set up the connection is to set up one or more links (for example, the link 1 and the link 2 in FIG. 2) used for communication between the STA and the AP.

In a passive scanning process, the STA may receive a management frame (for example, a beacon (Beacon) frame or a broadcast probe response (Probe Response) frame) sent by the AP on a channel. For example, the STA may search for, through jumping on different channels, the beacon frame sent by the AP. Once the STA obtains management information of the AP through the beacon frame, the STA may further communicate with the AP through a probe request (Probe Request) frame or a probe response frame, to obtain other information from the AP.

In an active scanning process, the STA may actively broadcast a probe request frame when no beacon frame is detected through listening. After receiving the probe request frame, if a specific condition (the condition is not limited in embodiments of this application) is met, the AP may initiate random channel access to reply with a probe response frame.

To assist the STA in fast scanning, the AP may carry a reduced neighbor report element (Reduced Neighbor Report Element) in the beacon frame or the probe response frame to report related information of a corresponding AP. In this way, during scanning, the STA may obtain information about a neighboring AP and select an appropriate AP for association, so that the STA may not continuously scan the channels, to reduce a scanning time of the STA. According to a stipulation of 802. 11be, an affiliated AP needs to carry, in a reduced neighbor report element, information about another affiliated AP that belongs to a same AP MLD as the affiliated AP. For the STA, the neighboring AP refers to a neighboring AP of the STA, and for the AP, the neighboring AP refers to a neighboring AP of the AP.

Two MLDs (for example, the AP MLD and the non-AP MLD) may communicate with each other on a setup link (for example, the link 1 and the link 2). When a channel spacing between two radio frequency modules in the MLD is large enough, links corresponding to the two radio frequency modules may run independently, and do not interfere with each other. If two links in the MLD support sending data on one link and receiving data on the other link at the same time, the two links support simultaneous transmit and receive (simultaneous transmit and receive, STR). Otherwise, the two links support NSTR.

An implementation of the AP MLD is an NSTR mobile (mobile) AP MLD. According to a stipulation of the 802. 1 The protocol, the NSTR mobile AP MLD does not support STR (that is, usually supporting NSTR), and another type of AP MLD supports STR. The NSTR mobile AP MLD can implement a function of the AP MLD on the non-AP MLD by using software. In a scenario, a mobile phone may be set as an NSTR mobile AP MLD, to allow association with another device. For an NSTR link pair in the NSTR mobile AP MLD, one link may be defined as a primary link (Primary Link), and the other link may be defined as a non-primary link (Non-primary Link). An AP corresponding to the primary link is referred to as a primary AP (Primary AP), and an AP corresponding to a non-primary link is referred to as a non-primary AP (Non-primary AP). The non-primary AP is not allowed to send a beacon (Beacon) frame and reply with a probe response (Probe Response) frame, so that a legacy STA can be prevented from being associated with the non-primary AP. The non-AP MLD may carry related information of the non-primary link on the primary link, to implement an operation of using the non-primary link.

To reduce power consumption of the MLD and implement power saving of the MLD, a station like the non-primary AP may doze when not required, and a station in a doze state may be woken up by using a wakeup request. However, in some cases, for example, when the NSTR mobile AP MLD is at an extremely low battery level and operates in a low battery level mode, the NSTR mobile AP MLD may not want to be woken up. Therefore, embodiments of this application provide a communication method, to indicate whether an access point in a doze state is allowed to be woken up.

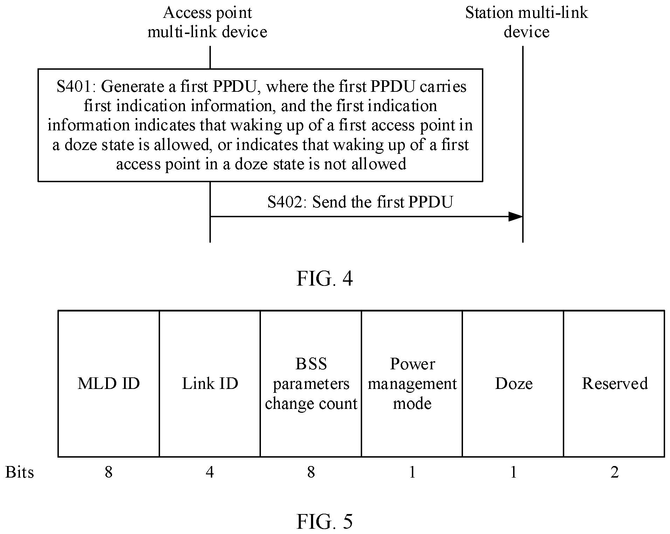

FIG. 4 shows a communication method according to an embodiment of this application. The method includes the following steps.

S401: An access point multi-link device (referred to as AP MLD below) generates a first PPDU. The first PPDU carries first indication information, and the first indication information indicates that waking up of a first access point (referred to as an AP below) in a doze state is allowed, or indicates that waking up of a first AP in a doze state is not allowed.

Generally, a power state (power state) of the AP includes an awake (Awake) state or the doze (Doze) state. In a possible example, in a power save mode (PS mode), the AP may switch between the awake state and the doze state, and a default state in the power save mode is the doze state. Unless otherwise specified, a power state in the power save mode is the doze state.

S402: The AP MLD sends the first PPDU.

Optionally, the AP MLD includes the first AP and a second AP, where the first AP is in the doze state, the second AP is in an awake state, and the AP MLD may send the first PPDU through the second AP.

For example, the AP MLD sends the first PPDU to a station multi-link device (referred to as a non-AP MLD or STA MLD below). Correspondingly, the non-AP MLD receives the first PPDU, and the non-AP MLD determines, based on the first PPDU, whether to wake up the first AP.

In an implementation, if the first indication information indicates that waking up of the first AP in the doze state is not allowed, the non-AP MLD determines not to wake up the first AP. If the first indication information indicates that waking up of the first AP in the doze state is allowed, the non-AP MLD may determine, based on whether there is data to be sent or received, whether to wake up the first AP. For example, when there is data to be sent or received, the non-AP MLD determines to wake up the first AP; or when there is no data to be sent or received, the non-AP MLD determines not to wake up the first AP. It may be understood that this is merely an example in which the non-AP MLD determines whether to wake up the first AP.

In the foregoing solution, when the first AP in the AP MLD is in the doze state, the AP MLD may indicate, by using the first indication information of the first PPDU, whether to allow waking up of the first AP in the doze state. If the first indication information indicates that waking up of the first AP in the doze state is allowed, the first AP may be woken up. If the first indication information indicates that waking up of the first AP in the doze state is not allowed, the first AP may keep in the doze state. Therefore, flexibility of controlling the AP MLD can be improved.

That waking up of the first AP in the doze state is allowed may mean that the first AP is allowed to be woken up by using a wakeup request, and/or the first AP is allowed to be woken up periodically. That waking up of the first AP in the doze state is not allowed may mean that the first AP is not allowed to be woken up by using a wakeup request, and/or the first AP is not allowed to be woken up periodically.

In an implementation 1.1, the first indication information includes a wake-up enable field, and the wake-up enable field indicates that waking up of the first AP in the doze state is allowed, or that waking up of the first AP in the doze state is not allowed.

The wake-up enable field may occupy one or more bits (bits). When the wake-up enable field is a first value (for example, 1 bit is 1 or 0), the wake-up enable field may indicate that the first AP in the doze state is allowed to be woken up. When the wake-up enable field is a second value (for example, 1 bit is 0 or 1), the wake-up enable field may indicate that the first AP in the doze state is not allowed to be woken up.

For example, in this implementation 1.1, the wake-up enable field may be carried in a reduced neighbor report element (reduced neighbor report element, RNR element) for indication.

In a related technology, a frame structure of an RNR element in a beacon frame is shown in FIG. 5, and includes an MLD identity (identity, ID) field (occupying 8 bits), a link identifier (Link ID) field (occupying 4 bits), a BSS parameters change count (BSS Parameters Change Count) field (occupying 8 bits), a power management mode (Power Management Mode) field (occupying 1 bit), a doze (Doze) field (occupying 1 bit), and a reserved (Reserved) field (occupying 2 bits). When the power management mode field is set to 0, it indicates an active mode; and when the power management mode field is set to 1, it indicates a power save mode (Power Save mode). When the power management mode field is set to 1, the doze field is valid; when the doze field is set to 0, it indicates an active state; and when the doze field is set to 1, it indicates a doze state. When a non-primary AP is in the active mode, a power state (power state) of the non-primary AP is an awake (Awake) state. When the non-primary AP is in the power save mode, the power state of the non-primary AP can be switched between the awake state and the doze state.

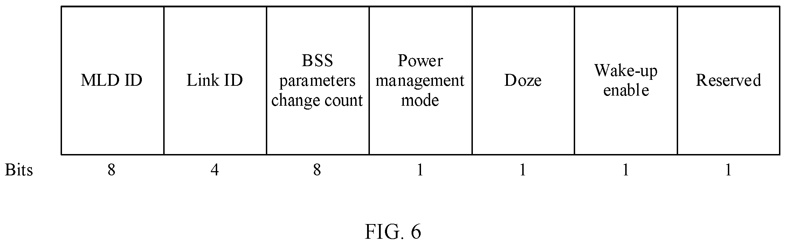

Different from FIG. 5, FIG. 6 shows a frame structure of an RNR element, including an MLD ID field (occupying 8 bits), a link ID field (occupying 4 bits), a BSS parameters change count field (occupying 8 bits), a power management mode field (occupying 1 bit), a doze field (occupying 1 bit), a wake-up enable (Wake-up Enable) field (occupying 1 bit), and a reserved field (occupying 1 bit). When the doze field is set to 1, the wake-up enable field is valid. When the wake-up enable field is set to 1, it indicates that waking up of the first AP in the doze state is allowed. When the wake-up enable field is set to 0, it indicates that waking up of the first AP in the doze state is not allowed.

In an implementation 1.2, the first indication information includes a power management mode field, and the power management mode field indicates that waking up of the first AP in the doze state is allowed, or that waking up of the first AP in the doze state is not allowed.

The power management mode field may occupy one or more bits.

Optionally, the power management mode field may further indicate that the first AP is in an active (Active) mode, and/or indicate that the first AP is in a sleep (Sleep) mode.

For example, when the power management mode field is set to a third value, it indicates that the first AP is in the active mode, the first AP keeps in the awake state, and state switching is not allowed; when the power management mode field is set to a fourth value, it indicates that the first AP is in the PS mode, the default state of the first AP is the doze state, and state switching is allowed; and when the power management mode field is set to a fifth value, it indicates that the first AP is in the sleep mode, the first AP keeps in the doze state, state switching is not allowed, and waking up is not allowed (for example, the non-AP MLD is not allowed to send a wakeup request for waking up).

In this implementation 1.2, the power management mode field may be carried in the RNR element for indication.

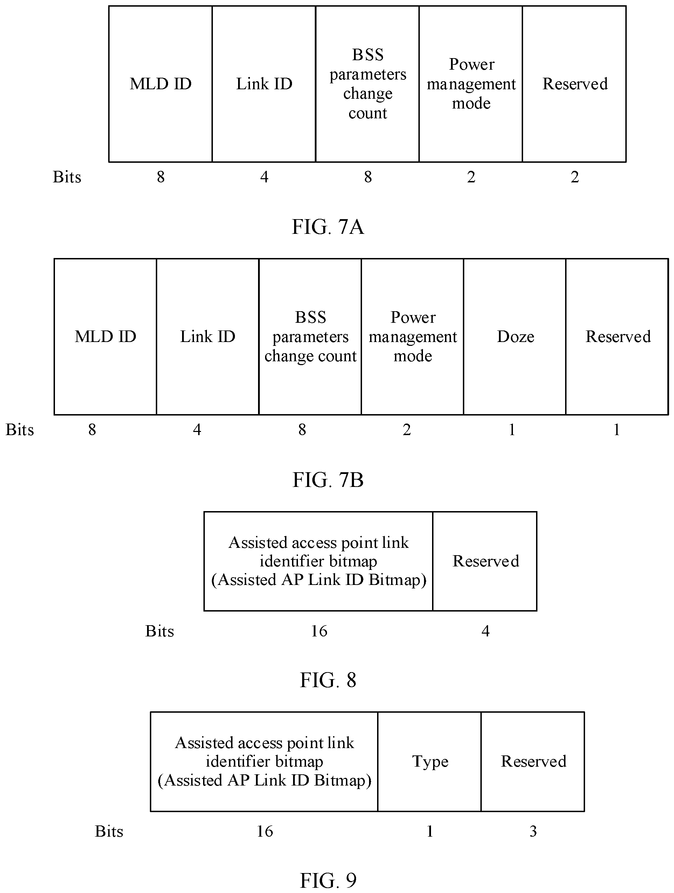

Different from FIG. 5, FIG. 7A shows a frame structure of an RNR element, including an MLD ID field (occupying 8 bits), a link ID field (occupying 4 bits), a BSS parameters change count field (occupying 8 bits), a power management mode field (occupying 2 bits), and a reserved field (occupying 2 bits). In an example, Table 1 shows a power management mode indicated by the power management mode field. When the power management mode field is set to 00 (that is, the third value is 00), it indicates that the first AP is in the active mode. When the power management mode field is set to 10 (that is, the fourth value is 10), it indicates that the first AP is in the PS mode. When the power management mode is set to 11 (that is, the fifth value is 11), it indicates that the first AP is in the sleep mode. Table 1 further shows that the power management mode field is set to a sixth value (for example, the sixth value is 01) as reserved.

**Table 1**

| Values (values) | Meaning (meaning) | Description (Description) |
|---|---|---|
| 00 | Active mode | In this mode, an AP is always in an awake state |
| 01 | Reserved | |
| 10 | PS mode | In this mode, the AP is allowed to switch between the awake state and a doze state, where the AP is in the doze state by default, and the AP may switch to the awake state by using a wakeup request |
| 11 | Sleep mode | In this mode, the AP is always in the doze state and is not allowed to be woken up |

Different from FIG. 5, FIG. 7B further shows a frame structure of an RNR element, including an MLD ID field (occupying 8 bits), a link ID field (occupying 4 bits), a BSS parameters change count field (occupying 8 bits), a power management mode field (occupying 2 bits), a doze field (occupying 1 bit), and a reserved field (occupying 1 bit). For a power management mode indicated by the power management mode field, refer to the examples in Table 1. Details are not described herein again.

If the first indication information indicates that waking up of the first AP in the doze state is allowed, the first AP is allowed to be woken up by using the wakeup request, and/or is allowed to be woken up periodically.

If waking up is performed by using the wakeup request, after S402, the non-AP MLD may send a second PPDU to the AP MLD, and the AP MLD receives the second PPDU. The second PPDU carries second indication information, and the second indication information is used to wake up a first AP corresponding to one or more links.

It may be understood that the AP MLD may also send a seventh PPDU to the non-AP MLD, and the non-AP MLD receives the seventh PPDU, where the seventh PPDU carries sixth indication information, and the sixth indication information is used to wake up a first STA corresponding to the one or more links.

A frame structure of the second PPDU sent by the non-AP MLD may be the same as or different from a frame structure of the sixth PPDU sent by the AP MLD.

In an implementation 2.1, the second indication information or the sixth indication information includes a link indication field, and the link indication information indicates a link (or a first AP or a first STA corresponding to the link) that is requested to be woken up.

The link indication field may occupy one or more bits. For example, the MLD supports 16 links, the link indication field may occupy 16 bits, and each bit corresponds to one link. When a bit is set to a seventh value (for example, 1 or 0), it indicates that a link corresponding to the bit is requested to be woken up. When a bit is set to an eighth value (for example, 0 or 1), it indicates that a link corresponding to the bit is not woken up.

For example, the link indication field may be a link bitmap (link bitmap) field.

Optionally, the link indication field may be carried in a link recommendation frame (Link Recommendation frame), and a frame type of the link recommendation frame may be an EHT action (Action) frame.

Table 2 shows a field format in the link recommendation frame, including a category (Category) field, an EHT action field, and a link bitmap field (occupying 16 bits). The sequence number in the table may refer to an order (order).

**Table 2**

| Sequence number | Field meaning |
|---|---|
| 1 | Category |
| 2 | EHT action |
| 3 | Link bitmap (16 bits) |

For example, the implementation 2.1 is applicable to a scenario in which the non-AP MLD sends the link indication field to the AP MLD. For another example, the implementation 2.1 is applicable to a unicast scenario. In this scenario, the non-AP MLD may be used as a transmit end to send the link indication field to the AP MLD, or the AP MLD may be used as a transmit end to send the link indication field to the non-AP MLD. Certainly, in some cases, the implementation 2.1 is applicable to a multicast scenario or a broadcast scenario. The AP MLD may separately send the seventh PPDU to each non-AP MLD in a plurality of non-AP MLDs, which is equivalent to carrying the link indication field in a unicast frame for indication.

In an implementation 2.2, the second indication information (or the sixth indication information) includes identifiers of a plurality of station multi-link devices (or a plurality of access point multi-link devices) and a link indication field corresponding to an identifier of each station multi-link device.

Similarities between the link indication field in the implementation 2.2 and the link indication field in the implementation 2.1 are not described in detail.

The identifiers of the plurality of station multi-link devices may be represented by an association identifier (association ID, AID) list (List) element. The link indication field may be a multi-link traffic element (Multi-Link Traffic element), and indicates information about a recommended link that is used for transmission.

Optionally, the plurality of station multi-link devices correspond to a same multicast address or a same broadcast address.

Table 3 shows a field format in a link recommendation frame, including a category field, an EHT action field, an AID list element, and a multi-link traffic element. The sequence number in the table may refer to an order (order).

**Table 3**

| Sequence number | Field meaning |
|---|---|
| 1 | Category |
| 2 | EHT action |
| 3 | AID list element |
| 4 | Multi-Link traffic element |

For example, the implementation 2.2 is applicable to a multicast scenario or a broadcast scenario. For another example, the implementation 2.2 is applicable to a scenario in which the AP MLD sends the link indication field to the non-AP MLD. Certainly, in some cases, the implementation 2.2 is applicable to a unicast scenario.

In an implementation 2.3, the second PPDU (or the seventh PPDU) includes a control (Control) field, the second indication information (or the sixth indication information) is carried in the control field, and the control field indicates the link that is requested to be woken up.

The control field may occupy one or more bits. For example, the MLD supports 16 links, the control field may occupy 16 bits, and each bit corresponds to one link.

For example, the control field may be an access point assistance request (AP assistance request, ARR) control field, and the ARR control field includes the second indication information (or the sixth indication information). For example, the ARR control field is carried in an HT control field in a MAC protocol data unit (MAC protocol data unit, MPDU) frame header. FIG. 8 shows a format of an ARR control field, including an assisted access point link identifier bitmap (Assisted AP Link ID Bitmap) field (occupying 16 bits) and a reserved field (occupying 4 bits).

Optionally, the access point assistance request control field may further carry third indication information, and the third indication information indicates that the access point assistance request control field is used to wake up a first AP that is in a doze state and that is in a specified access point multi-link device.

In a related technology, the ARR control field is used by the STA MLD to request the AP MLD to send a trigger (Trigger) frame on an indicated link, to assist the non-AP MLD in performing synchronization. To distinguish whether the ARR control field is used to request the AP MLD to send the trigger frame on the corresponding link (namely, the indicated link) or used to request the AP MLD to wake up on the corresponding link, when the third indication information is a ninth value (for example, 1 bit is 1 or 0), the third indication information is used to request the AP MLD to wake up on the corresponding link; or when the third indication information is a tenth value (for example, 1 bit is 0 or 1), the third indication information is used to request the AP MLD to send the trigger frame on the corresponding link.

FIG. 9 shows a format of an ARR control field, including an assisted AP link ID bitmap field (occupying 16 bits), a type (Type) field (occupying 1 bit), and a reserved field (occupying 3 bits). When the type field is set to 0, the AP MLD is requested to send the trigger frame on the corresponding link. When the type field is set to 1, it indicates that the AP MLD is requested to wake up on the corresponding link. The assisted AP link ID bitmap field indicates the link that is requested to be woken up. For example, the non-AP MLD requests to wake up the corresponding link by sending a wakeup request carrying the ARR control field.

If the first AP switches from the doze state to the awake state, it may be considered that all STAs that do not send the ARR control field (the type field is set to 1) and that correspond to the first AP are in a doze state, and all STAs that send the ARR control field (the type field is set to 1) and that correspond to the first AP are in an awake state in a power save mode or in an active mode.

The implementation 2.3 is applicable to a unicast scenario, or is applicable to a multicast scenario or a broadcast scenario.

In an implementation 2.4, the second indication information (or the sixth indication information) includes a more data (More Data) field, and the more data field indicates to request to wake up a link corresponding to the first AP.

The more data field may occupy one or more bits.

The more data field may be used to notify the AP MLD whether there is to-be-transmitted data. If the more data field is set to an eleventh value (for example, 1 bit is 1 or 0), it indicates that there is data to be sent or received, and the link corresponding to the first AP is requested to be woken up. If the more data field is set to a twelfth value (for example, 1 bit is 0 or 1), it indicates that there is no data to be sent or received, and the link corresponding to the first AP is not woken up.

For example, the non-AP MLD sends an MPDU on a primary link, where the MPDU includes a more data field used to notify the first AP whether data to be sent or received is transmitted on a non-primary link.

For another example, the non-AP MLD sends an MPDU on a non-primary link, where the MPDU includes a more data field used to notify the first AP whether data to be sent or received is transmitted on the non-primary link.

For another example, the non-AP MLD sends synchronization (synchronization, sync) MPDUs on a primary link and a non-primary link, where the sync MPDU includes a more data field, and the more data field is used to notify the first AP whether there is data to be sent or received. More data fields in the sync MPDUs sent on the primary link and the non-primary link are set to a same value.

If an AP is woken up periodically, a periodic active time period and a periodic doze time period may be set according to the TWT technology, to control the AP to be woken up periodically. The AP is in an awake state in the active time period, and is in a doze state in the doze time period.

TWTs include an individual TWT (individual TWT) and a broadcast TWT (broadcast TWT).

In the individual TWT, each STA may separately set up a TWT protocol with the AP, and each STA may have a corresponding active time period and a corresponding doze time period.

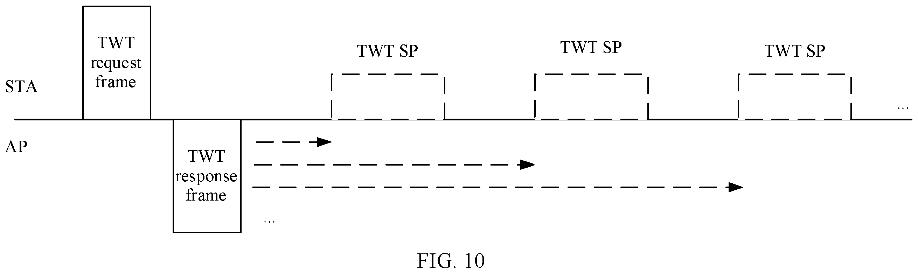

As shown in FIG. 10, the STA is used as a TWT requesting station (TWT requesting STA) to send a TWT request frame to the AP, to request to set an awake time; and the AP is used as a TWT responding station (TWT responding STA) to send a TWT responding frame to the TWT requesting STA. A TWT protocol is set up between the TWT requesting STA and the TWT responding STA. The TWT protocol may include one or more rTWT SPs.

After the TWT protocol is set up, the TWT requesting STA and the TWT responding STA keeps an awake state in the negotiated rTWT SPs, to facilitate data receiving and sending. Outside the time period, the TWT requesting STA and/or the TWT responding STA may implement power saving through dozing.

It may be understood that the TWT requesting STA may alternatively be an AP, and the TWT responding STA is a STA.

In the broadcast TWT, a group of STAs may set up a public TWT protocol with the AP. The group of STAs may correspond to a same active time period and a same doze time period.

The AP may carry information about one or more broadcast TWTs in a beacon frame, and each broadcast TWT is represented by a broadcast TWT identifier (TWT ID) and a MAC address of the AP. After receiving the beacon frame, if a STA intends to join the broadcast TWT, the STA may send a broadcast TWT setup request message to the AP, to join the broadcast TWT. During broadcast TWT setup, the STA needs to specify a broadcast TWT ID to request to join a specific broadcast TWT. After joining the broadcast TWT, the STA may wake up based on an SP indicated by a TWT parameter set, to communicate with the AP. It should be noted that, if the STA supports the broadcast TWT but does not explicitly join a broadcast TWT ID, the STA joins a broadcast TWT whose broadcast TWT ID=0 by default.

The TWT parameter set may indicate an occurrence period of an rTWT SP and duration of each rTWT SP, and may further indicate a life cycle of the broadcast TWT. The life cycle of the broadcast TWT is in a unit of a beacon frame interval, and indicates duration of the setup broadcast TWT.

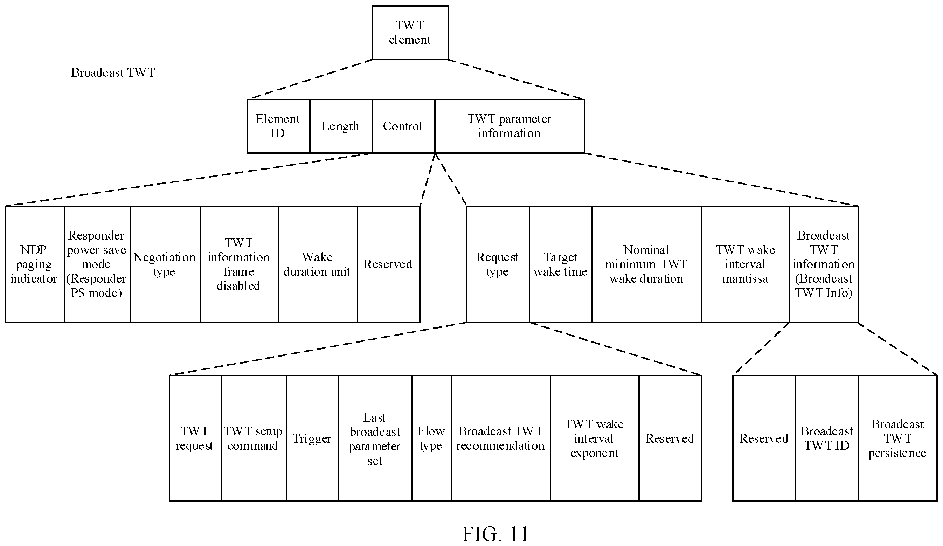

FIG. 11 shows a format of a broadcast TWT element, including an element ID field, a length (Length) field, a control field, and a TWT parameter information (TWT Parameter Information) field. The control field includes a neighbor discovery protocol (neighbor discovery protocol, NDP) paging indicator (NDP Paging Indicator) field, a responder power save mode (Responder PS mode) field, a negotiation type (Negotiation Type) field, a TWT information frame disabled (TWT Information Frame Disabled) field, a wake duration unit (Wake Duration Unit) field, and a reserved field. The TWT parameter information field includes a request type (Request Type) field, a target wake time (Target Wake Time) field, a nominal minimum TWT wake duration (Nominal Minimum TWT Wake Duration) field, a TWT wake interval mantissa (TWT Wake Interval Mantissa) field, and a broadcast TWT information (Broadcast TWT Info) field. The request type field includes a TWT request field, a TWT setup command (TWT Setup Command) field, a trigger field, a last broadcast parameter set (Last Broadcast Parameter Set) field, a flow type (Flow Type) field, a broadcast TWT recommendation (Broadcast TWT Recommendation) field, a TWT wake interval exponent (TWT Wake Interval Exponent) field, and a reserved field. The broadcast TWT info field includes a reserved field, a broadcast TWT ID field, and a broadcast TWT persistence (Broadcast TWT Persistence) field.

The AP MLD may add link unavailability (Link Unavailability) information to the reserved field in the RNR element, to indicate whether a link is available. For example, if the link unavailability information is set to 1, it indicates that the corresponding link is unavailable for transmission, and if the link unavailability information is set to 0, it indicates that the corresponding link is available for transmission.

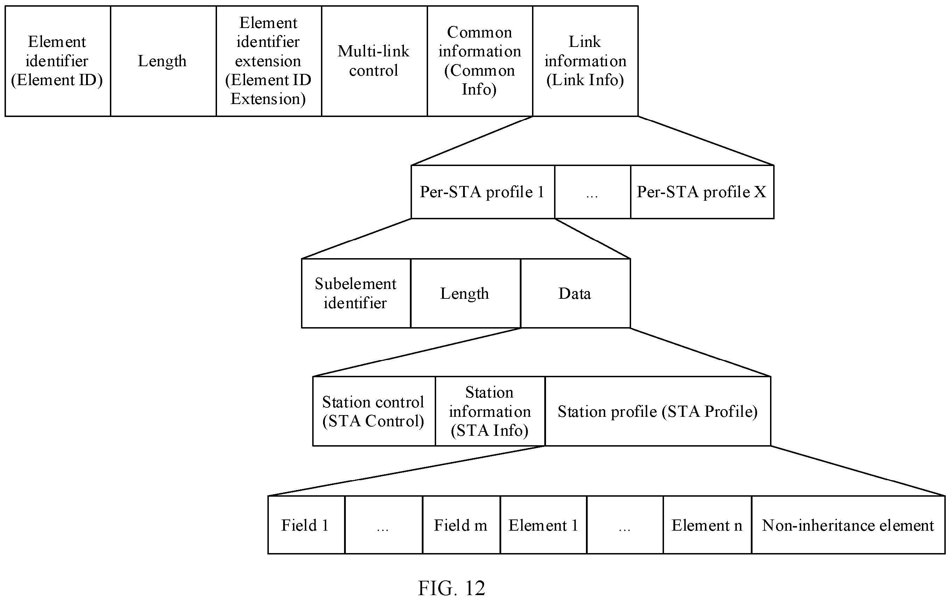

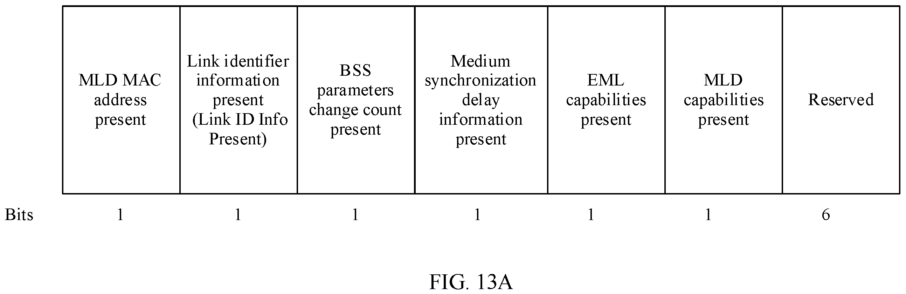

Alternatively, the AP MLD may indicate, in a per-STA profile (Per-STA Profile) field in a multi-link element (Multi-link element) in the beacon frame, a link unavailability count (Link Unavailability Count) time and link unavailability duration (Link Unavailability Duration). A frame structure of the multi-link element is shown in FIG. 12, and includes an element identifier (Element ID) field, a length field, an element identifier extension (Element ID Extension) field, a multi-link control (Multi-Link Control) field, a common information (Common Info) field, and a link information (Link Info) field, where the common info field carries common information of a plurality of stations in the MLD and information about the MLD. The link info field carries information about a station on each link in the MLD, and includes one or more per-STA profile (Per-STA Profile) fields. The per-STA profile field includes a subelement identifier (Subelement ID) field, a length field, and a data (Data) field. The data field includes a station control (STA Control) field, a station information (STA Info) field, and a station profile (STA Profile) field. The STA profile field includes one or more fields (fields), one or more elements (Elements), and a non-inheritance element (Non-Inheritance Element). The multi-link control field carries a type of the multi-link element (for example, two variants: a basic variant (Basic variant) and a probe request variant (Probe Request variant) defined in a current protocol, or another type) and a presence bitmap (Presence Bitmap) field that indicate which fields are not present. A format of the presence bitmap field may be shown in FIG. 13A, and includes an MLD MAC address present (MLD MAC Address Present) field (occupying 1 bit), a link identifier information present (Link ID Info Present) field (occupying 1 bit), a BSS parameters change count present (BSS Parameters Change Count Present) field (occupying 1 bit), a medium synchronization delay information present (Medium Synchronization Delay Information Present) field (occupying 1 bit), an enhance multi-link (enhance multi-link, EML) capabilities present (EML Capabilities Present) field (occupying 1 bit), and an MLD capabilities present (MLD Capabilities Present) field (occupying 1 bit), and a reserved field (occupying 6 bits).

However, the AP MLD cannot accurately determine when to perform indication by using the link unavailability information or the per-STA profile field, and consequently, data may still be received and sent out of the SP.

In an implementation 3.1, the AP sends a sixth PPDU, where the sixth PPDU carries fifth indication information, and the fifth indication information indicates that transmission is allowed out of the rTWT SP or transmission is not allowed out of the rTWT SP. In this implementation, the AP indicates, by using the fifth indication information, to forbid data receiving and sending out of the rTWT SP. This can prevent data receiving and sending from being performed out of the rTWT SP, and further save power.

For example, the fifth indication information includes a transmission allowed out of TWT SP (Transmission allowed Out of TWT SP) field, and the transmission allowed out of TWT SP field may occupy one or more bits. If the transmission allowed out of TWT SP field is set to a thirteenth value (for example, 1 bit is 1 or 0), it indicates that transmission is allowed out of the rTWT SP. If the transmission allowed out of TWT SP field is set to a fourteenth value (for example, 1 bit is 0 or 1), it indicates that transmission is not allowed out of the rTWT SP.

Optionally, the transmission allowed out of TWT SP field may be newly added to the TWT element.

In an implementation 3.2, the first PPDU includes a power management mode field, and the power management mode field further indicates a periodic power save mode (periodic power save mode). In the periodic power save mode, it may be indicated by default that transmission is not allowed out of the rTWT SP.

For example, when the power management mode field in Table 1 is set to a sixth value (for example, the sixth value is 01), it indicates the periodic power save mode.

In an implementation 3.3, when the fifth indication information indicates that transmission is not allowed out of the rTWT SP, the power management mode field further indicates the periodic power save mode. In other words, the implementation 3.3 is an implementation combining the implementation 3.1 and the implementation 3.2.

For the STA MLD that does not support the TWT protocol, when the AP MLD operates in the periodic power save mode, the STA MLD is not allowed to use the non-primary link and the AP MLD for transmission. When the STA MLD supports and reaches the TWT protocol, and the AP MLD operates in the periodic power save mode, the STA MLD is allowed to use the non-primary link and the AP MLD for transmission in the SP.

In an implementation 3.4, if the first AP is in the power save mode (for example, the doze state in the power save mode), and a TWT protocol has been set up between the first AP and a corresponding STA, namely, a member station (member STA), the first AP may automatically wake up before or when the TWT SP starts, and the corresponding STA does not need to send a wakeup request for waking up.

Optionally, the first AP and the corresponding member STA automatically wake up before the TWT SP starts, to perform data exchange. Channel access may be initiated based on a network allocation vector synchronization delay (network allocation vector synchronization delay, NAVSyncDelay) or parameter information indicated by the medium synchronization delay information subfield in the multi-link element. For example, channel access may be initiated after waking up. Duration between a time point at which the first AP switches to the awake state and a start time point of the TWT SP is not limited herein.

In this implementation 3.4, the power management mode field may not indicate the periodic power save mode.

In addition, the first AP that is in the power save mode does not send the beacon frame. In this case, when sending the beacon frame, another AP (for example, the second AP) in the AP MLD may carry the TWT element in the link info of the first AP in the multi-link element.

According to the implementations 3.1 to 3.4, after the first AP in the power save mode in the AP MLD is woken up by the one or more STA MLDs, the STA MLDs may determine, in the following implementations, that the first AP in the AP MLD is in the awake state.

In an implementation 4.1, the AP MLD sends a third PPDU to the STA MLD, where the third PPDU indicates a finally woken-up first AP.

Optionally, the AP MLD may send the third PPDU on the primary link or the non-primary link.

For example, after receiving the second PPDU (for example, the link recommendation frame), the AP MLD may reply with a corresponding eighth PPDU (for example, the link recommendation frame). The eighth PPDU includes a link indication field, to indicate the finally woken-up link (or a first AP corresponding to the link). For example, the MLD supports 16 links, the link indication field may occupy 16 bits, and each bit corresponds to one link. When a bit is set to 1 or 0, it indicates that a link corresponding to the bit is woken up. When a bit is set to 0 or 1, it indicates that a link corresponding to the bit is not woken up.

In an implementation 4.2, the AP MLD sends a fourth PPDU to the STA MLD on a woken-up link, where the fourth PPDU implicitly indicates that a first AP corresponding to the link is woken up.

Optionally, the AP MLD may send the fourth PPDU on the non-primary link.

For example, the fourth PPDU may be a trigger frame or a PS-poll frame.

In an implementation 4.3, the AP MLD accepts the wakeup request by default, and switches from the doze state to the awake state after the wakeup delay.

The wakeup delay is a time for the first AP to switch from the doze state to the awake state. In other words, the wakeup delay is determined based on a delay required for the first AP to switch from the doze state to the awake state. For example, the delay for the first AP to switch from the doze state to the awake state is T, and the awake delay may be T+t or T+t. Optionally, after receiving the wakeup request, the first AP needs time t to parse the wakeup request, and then needs time T to switch from the doze state to the awake state. In this case, the wakeup delay may be T+t.

For example, the first PPDU may further include a wakeup delay field, and the wakeup delay field indicates the delay for the first AP to switch from the doze state to the awake state.

For another example, the AP MLD sends a fifth PPDU, where the fifth PPDU includes a wakeup delay field, and the wakeup delay field indicates the delay for the first AP to switch from the doze state to the awake state.

Optionally, the fifth PPDU further includes a power save operation support field, and the power save operation support field indicates whether the wakeup delay field is present.

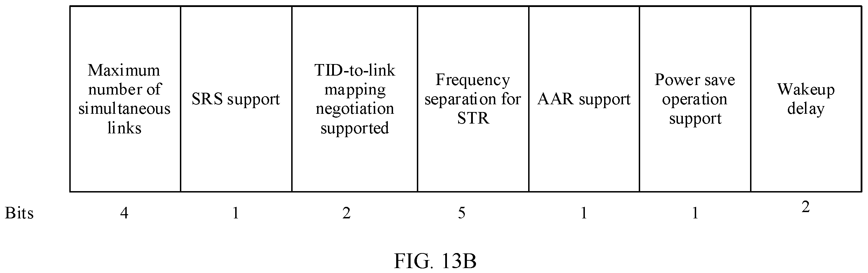

For example, the wakeup delay field and the optional power save operation support field are carried in a multi-link control field. FIG. 13B is a diagram of a possible format of the multi-link control field, including a maximum number of simultaneous links (Maximum Number Of Simultaneous Links) field (occupying 4 bits), a sounding reference signal (sounding reference signal, SRS) support (Support) field (occupying 1 bit), a TID-to-link mapping negotiation supported (TID-To-Link Mapping Negotiation Supported) field (occupying 2 bits), a frequency separation for STR (Frequency Separation For STR) field (occupying 5 bits), an AAR support field (occupying 1 bit), a power save operation support (Power Save Operation Support) field (occupying 1 bit), and a wakeup delay (Wakeup Delay) field (occupying 2 bits). When the power save operation support field is set to 1 or 0, the wakeup delay field is present. When the power save operation support field is set to 0 or 1, the wakeup delay field is not present.

The wakeup delay field indicates the delay required for the first AP to switch from the doze state to the awake state. For the delay indicated by the wakeup delay field, refer to an example in Table 4. When the wakeup delay field is set to a first value, for example, 00 (or 1), it indicates that the wakeup delay is 0 microseconds (µs). When the wakeup delay field is set to a second value, for example, 01 (or 1), it indicates that the wakeup delay is 32 µs. When the wakeup delay field is set to a third value, for example, 10 (or 2), it indicates that the wakeup delay is 64 µs. When the wakeup delay field is set to a fourth value, for example, 11 (or 3), it indicates that the wakeup delay is 128 µs.

**Table 4**

| Values | Wakeup delay |
|---|---|
| 00 (or 0) | 0 µs |
| 01 (or 1) | 32 µs |
| 10 (or 2) | 64 µs |
| 11 (or 3) | 128 µs |

After the wakeup delay, it may be considered that the first AP switches to the awake state. Correspondingly, after the wakeup delay, the non-AP MLD may start channel access by using the first STA (in the awake state) corresponding to the first AP, and the AP MLD and the non-AP MLD may communicate through a link between the first AP and the first STA.

The fifth PPDU may include a mode switch count field. The mode switch count field indicates a remaining time for the first AP to switch from a current mode to a target mode. For example, the mode switch count field indicates a number of TBTTs that are further needed for mode switching.

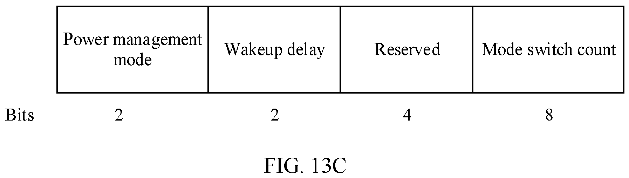

For example, the wakeup delay field and the optional mode switch count field are carried in a power management information (Power Management Information) field. FIG. 13C is a diagram of a possible format of the power management information field, including a power management mode field (occupying 2 bits), a wakeup delay field (occupying 2 bits), a reserved field (occupying 4 bits), and a mode switch count (Mode Switch Count) field (occupying 8 bits). For a mode indicated by the power management mode field, refer to Table 1. For a delay indicated by the wakeup delay field, refer to Table 4.

The fifth PPDU may carry a beacon frame. For the mode switch count field, if the field corresponds to a non-primary link of an NSTR mobile AP MLD, because the NSTR mobile AP MLD does not send a beacon frame on the non-primary link, a TBTT corresponding to the field refers to a TBTT of a primary link, namely, a number of TBTTs that are further needed for a first AP corresponding to the primary link to perform mode switching.

The power management information field may be carried in a common info field, and/or carried in a link info field.

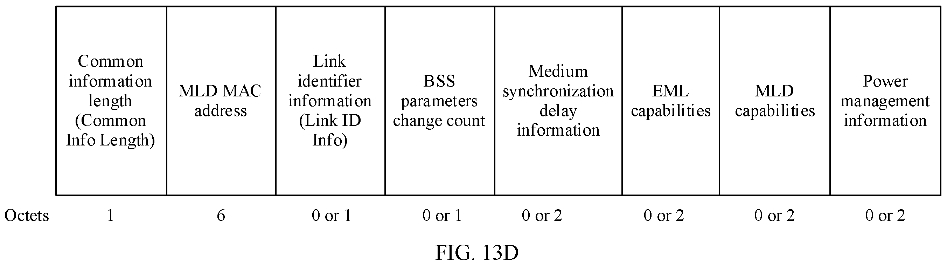

If the power management information field is carried in the common info field, FIG. 13D is a diagram of a possible format of the common info field, including a common info length field (occupying 1 octet), an MLD MAC address field (occupying 6 octets), a link ID info field (occupying 0 or 1 octet), a BSS parameters change count field (occupying 0 or 1 octet), a medium synchronization delay information field (occupying 0 or 2 octets), an EML capabilities field (occupying 0 or 2 octets), an MLD capabilities field (occupying 0 or 2 octets) and a power management information field (occupying 0 or 2 octets).

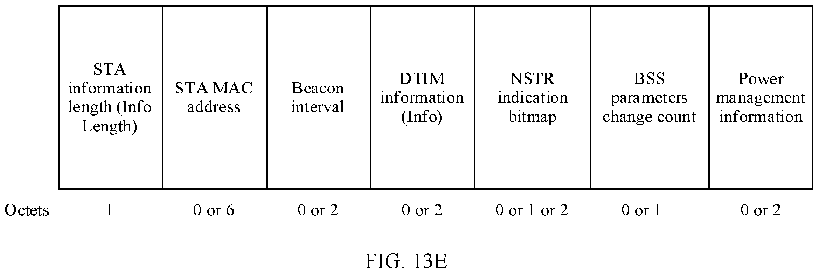

If the power management information field is carried in the link info field, FIG. 13E is a diagram of a possible format of a STA info field, including a STA info length field (occupying 1 octet), a STA MAC address field (occupying 0 or 6 octets), a beacon interval (Beacon Interval) field (occupying 0 or 2 octets), a delivery traffic indication map (delivery traffic indication map, DTIM) info field (occupying 0 or 2 octets), an NSTR indication bitmap field (occupying 0 or 1 or 2 octets), a BSS parameters change count field (occupying 0 or 1 octet), and a power management information field (occupying 0 or 2 octets).

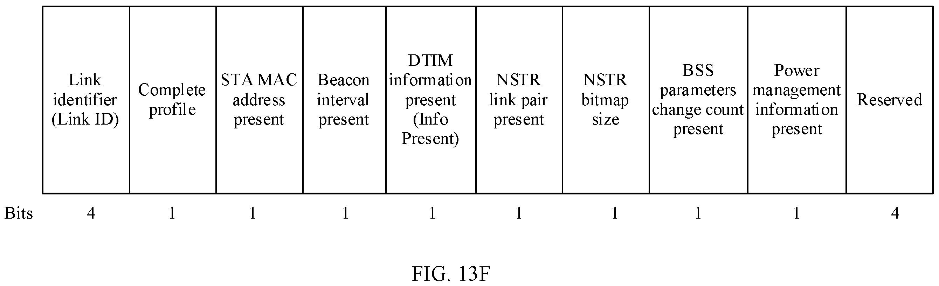

The fifth PPDU may include seventh indication information, and the seventh indication information indicates whether the mode switch count field is present. For example, the seventh indication information is added to the STA control field, to indicate whether the power management information field is present. FIG. 13F is a diagram of a possible format of the STA control field, including a link ID field (occupying 4 bits), a complete profile (Complete Profile) field (occupying 1 bit), a STA MAC address present field (occupying 1 bit), a beacon interval present field (occupying 1 bit), a DTIM info present field (occupying 1 bit), an NSTR link pair (Link Pair) field (occupying 1 bit), an NSTR bitmap size (Bitmap Size) field (occupying 1 bit), a BSS parameters change count present field (occupying 1 bit), a power management information present field (occupying 1 bit), and a reserved field (occupying 4 bits). For example, when a value of the power management information present field is 1, it indicates that the power management information field is present. When a value of the power management information present field is 0, it indicates that the power management information field is not present.

According to the implementations 4.1 to 4.3, after the first AP in the power save mode in the AP MLD is woken up by one or more non-AP MLDs, in some cases, the first AP may switch from the awake state to the doze state again.

For example, if a channel is in an idle (idle) state, the first AP may switch from the awake state to the doze state.

The channel may be in the idle state periodically.

For another example, when the first AP switches to be in the awake state, if all non-AP MLDs that have sent wakeup requests have set more data fields to 0, the first AP may switch from the awake state to the doze state.

Specifically, the one or more STA MLDs may send fourth indication information to the AP MLD. If the AP MLD receives the fourth indication information sent by the one or more STA MLDs, and the fourth indication information indicates a fifteenth value, the first AP of the AP MLD may switch from the awake state to the doze state.

The fourth indication information may occupy one or more bits. For example, the fourth indication information occupies 1 bit, and when the 1 bit is set to 0 (that is, the fifteenth value is set to 0), the first AP switches from the awake state to the doze state.

For example, the fourth indication information is information indicated by the more data field, and indicates whether there is to-be-transmitted data. Optionally, if the AP MLD performs data receiving and sending with a plurality of STA MLDs, when all the STA MLDs send more data fields to the AP MLD, and the more data fields are set to 0, the AP MLD determines that a STA corresponding to the first AP in all the STA MLDs has no to-be-transmitted data, and the first AP in the AP MLD may switch to the doze state. The to-be-transmitted data may be referred to as a buffered unit (Buffered unit, BU).

For example, the one or more STA MLDs may send, to the AP MLD, a data frame that includes a more data field that is set to 0, a quality of service (quality of service, QoS) null (Null) frame, or a control frame, to indicate the first AP to switch from the awake state to the doze state.

After the first AP switches to the doze state, when the STA MLD wants to retransmit data, the STA MLD may wake up the first AP again by using the implementations 3.1 to 3.3.

The foregoing method provided in embodiments of this application may also be applied to a regular (regular) AP MLD, and there is no legacy STA on a corresponding link of the regular AP MLD. If there is a legacy STA, when the AP MLD wants to disable (disable) a link (that is, the STA MLD associated with the AP MLD cannot map a traffic identifier (traffic identifier, TID) of the STA MLD to the link), or the AP MLD wants to set a link as a clean link (Clean link) (that is, the link is dedicated for transmission of a low-delay service), the AP MLD may make, unidentifiable by the STA, a legacy frame sent on the link that is to be set, so that the legacy STA does not use the associated link to send data. For example, there is a link 1, a link 2, and a link 3 in the AP MLD, and the AP MLD wants to set the link 3 as a clean link. The AP MLD may set the clean link. In this way, even if the legacy STA finds that the link 3 is available, the legacy STA cannot be associated with the link 3.

For example, the AP MLD may send a reduced neighbor report element (Reduced Neighbor Report element), where a target beacon transmission time (target beacon transmission time) information set (TBTT info set) field that corresponds to the first AP and that is in the reduced neighbor report element carries a multi-link device parameters (MLD Parameters) field, and a TBTT info length is set to a first length value (for example, 3), so that the legacy STA ignores the first AP or a first link corresponding to the first AP.

For example, the AP MLD may send a beacon (Beacon) frame on the first link, where the beacon frame carries the reduced neighbor report element.

Optionally, a TBTT information field type (TBTT info Field Type) in the reduced neighbor report element may be set to 0 or 1.

Optionally, the TBTT info field type in the reduced neighbor report element may be set to 0 or 1.

For another example, the AP MLD may send a reduced neighbor report element, and a TBTT info field type that corresponds to the first AP and that is in the reduced neighbor report element is set to a sixteenth value (for example, the sixteenth value is set to 1), so that the legacy STA ignores the first AP or a first link corresponding to the first AP.

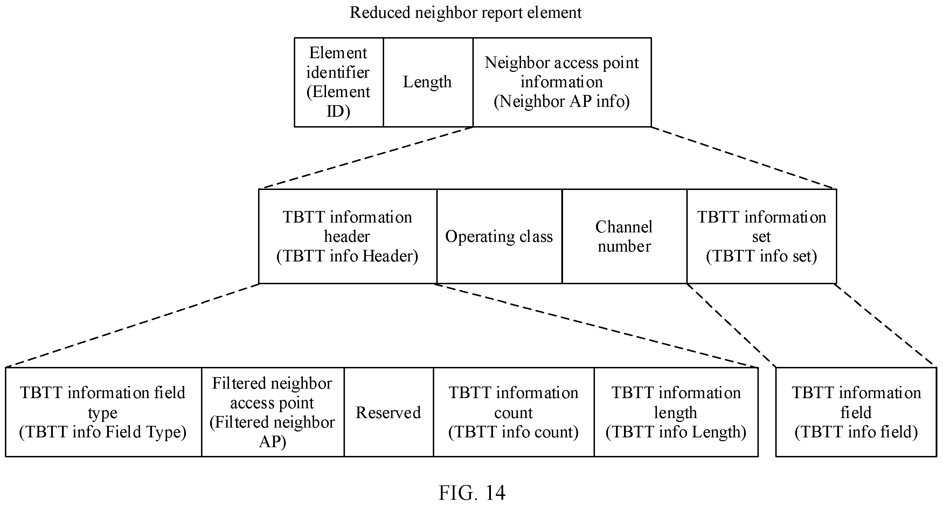

The reduced neighbor report element format may be shown in FIG. 14. The reduced neighbor report element includes an element identifier (Element ID) field, a length field, and one or more neighbor AP information (Neighbor AP info) fields. The neighbor AP info field includes a TBTT information header (TBTT info Header) field, an operating class (Operating Class) field, a channel number (Channel Number) field, and one or more TBTT info set fields. The TBTT info header field includes a TBTT info field type field, a filtered neighbor AP (Filtered neighbor AP) field, a reserved field, a TBTT information count (TBTT info count) field, and a TBTT info length field. The TBTT info set field includes one or more TBTT info fields.

The operating class field indicates an operating class of an operating channel of the reported AP, where 0 is a reserved value of the operating class field.

The channel number field indicates a channel number corresponding to the operating channel of the reported AP, where 0 is a reserved value of the channel number field. The STA may determine a specific location of a channel of the AP on a frequency band based on the operating class field and the channel number field.

The TBTT info field type field indicates a TBTT info type. This field and the TBTT info length field together indicate a format of the TBTT info field. Herein, 1, 2, and 3 are reserved values of the TBTT info field type field.

The filtered neighbor AP field indicates whether service set identifiers (service set identifiers, SSIDs) of all basic service sets (basic service sets, BSSs) carried in the neighbor AP info field match an SSID in the probe request frame.

The reserved field occupies 1 bit (bit).

The TBTT info count field indicates a number of TBTT info fields included in the TBTT info set field.

The TBTT info length field indicates a length of each TBTT info field. Formats of information carried in the TBTT info field in different lengths may be shown in Table 5.

**Table 5**

| TBTT information length (octets) | Content carried in the TBTT information field |
|---|---|
| 1 | Neighbor AP TBTT offset (offset) field |
| 2 | Neighbor AP TBTT offset field and BSS parameter field |
| 4 | Neighbor AP TBTT offset field and MLD parameters field |
| 5 | Neighbor AP TBTT offset field and short (short) SSID field |
| 6 | Neighbor AP TBTT offset field, short SSID field, and BSS parameter field |
| 7 | Neighbor AP TBTT offset field and BSSID field |
| 8 | Neighbor AP TBTT offset field, BSSID field, and BSS parameter field |
| 9 | Neighbor AP TBTT offset field, BSSID field, BSS parameter field, and 20 megahertz (MHz) power spectral density (power spectral density, PSD) field |
| 10 | Neighbor AP TBTT offset field, BSSID field, and MLD parameters field |
| 11 | Neighbor AP TBTT offset field, BSSID field, and short SSID field |
| 12 | Neighbor AP TBTT offset field, BSSID field, short SSID field, and BSS parameter field |
| 0, 3, 14, and 15 | Reserved |
| 13 | Neighbor AP TBTT offset field, BSSID field, short SSID field, BSS parameter field, and 20 MHz PSD field |
| 16 | Neighbor AP TBTT offset field, BSSID field, short SSID field, BSS parameter field, 20 MHz PSD field, and MLD parameters field |
| 17 to 255 | Reserved, where the first 16 octets carry same information as the TBTT information field with a length of 16 |

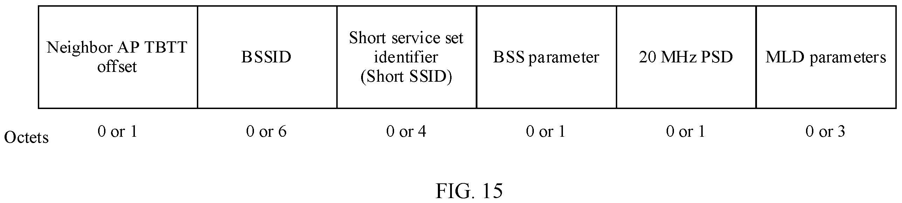

A possible format of the TBTT info field is shown in FIG. 15, and includes a neighbor AP target beacon transmission time offset (Neighbor AP TBTT offset) field, a basic service set identifier (BSS identifier, BSSID) field, a short SSID field, a BSS parameter field, a 20 MHz PSD field, and an MLD parameters field.

The neighbor AP TBTT offset field occupies 0 or 1 octet (octet), and indicates an offset between beacon frame sending times of a reported BSS and a BSS that sends the report (Report), where a unit is a time unit (time unit, TU), namely, 1024 microseconds or 1 millisecond. The field being 254 indicates that the offset is 254 TUs or higher, and the field being 255 indicates that a specific offset is unknown.

The BSSID field is an optional field, occupies 0 or 6 octets, and indicates a BSSID corresponding to the reported BSS.

The short SSID field is an optional field, occupies 0 or 4 octets, and indicates an SSID of the BSS.

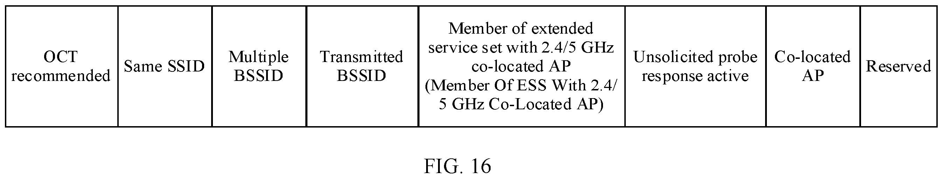

The BSS parameter field is an optional field, occupies 0 or 1 octet, and indicates a related parameter of the BSS. As shown in FIG. 16, the BSS parameter field may include an on-channel tunneling (On-channel Tunneling, OCT) recommended (recommended) field, a same (Same) SSID field, a multiple (Multiple) BSSID field, a transmitted (Transmitted) BSSID field, a member of extended service set with 2.4/5 GHz co-located AP (Member Of ESS With 2.4/5 GHz Co-Located AP) field, an unsolicited probe response active (Unsolicited Probe Response Active) field, a co-located AP (Co-located AP) field, and a reserved field. The OCT recommended field is located at a location of a bit 0, and indicates that the reported BSS expects to exchange a management-type media protocol data unit (media protocol data unit, MPDU) with the reported AP through an OCT mechanism. The same SSID field is located at a location of a bit 1, and indicates whether the reported AP and an AP that transmits the element have a same SSID. The multiple BSSID field is located at a location of a bit 2, and indicates whether the reported AP is a part of a multiple BSSID set. The transmitted BSSID field is located at a location of a bit 3. If the reported AP is a part of a multiple BSSID set, it further indicates whether the reported AP is a transmitted BSSID or a non-transmitted (non-transmitted) BSSID. The member of ESS with 2.4/5 GHz co-located AP field is located at a location of a bit 4, and indicates whether the reported AP is located at a same location as a 2.4/5 GHz AP (that is, whether the reported AP is a 6 GHz only AP) and is a member of an extended service set. The unsolicited probe response active field is located at a location of a bit 5, and indicates whether the reported AP enables an active probe response. The co-located AP field is located at a location of a bit 6, and indicates whether the reported AP and the AP that transmits the report are co-located. The reserved field is located at a location of a bit 7.

The 20 MHz PSD field is an optional field, occupies 0 or 1 octet, and indicates a maximum transmit power spectral density.

The MLD parameters field occupies 0 or 3 octets, and indicates a related MLD parameter. The field may include the following subfields: a multi-link device identifier (MLD ID) field, a link identifier (Link ID) field, a BSS parameters change count (BSS Parameters Change Count) field, and a reserved field. The MLD ID field occupies 8 bits, and indicates an identifier of the AP MLD. The link ID field occupies 4 bits, and indicates a link identifier corresponding to the reported AP. The BSS parameters change count field occupies 8 bits. When a key update occurs on the reported AP, a value of this field increases. Otherwise, a value of this field remains unchanged. The reserved field occupies 4 bits.

The foregoing implementations may be used separately or in combination.

It may be understood that, in embodiments of this application, an access point multi-link device (or a component (for example, a chip or a circuit) of the access point multi-link device) and/or a station multi-link device (or a component of the station multi-link device) may perform some or all of the steps in embodiments of this application. These steps or operations are merely examples. Other operations or variations of various operations may be further performed in embodiments of this application. In addition, the steps may be performed in a sequence different from a sequence presented in embodiments of this application, and not all the operations in embodiments of this application may be performed.

It should be noted that, in the following embodiments of this application, names of messages or names of parameters in messages of devices are merely examples, and the messages or the parameters may have other names in specific implementations. This is not specifically limited in embodiments of this application. In addition, a sequence, names, values, carried information, meanings represented by, or octets/bits occupied by fields in a frame structure are merely an example. This is not specifically limited in embodiments of this application.

In the foregoing embodiments provided in this application, the methods provided in embodiments of this application are separately described from a perspective of interaction between an access point multi-link device and a station multi-link device. To implement the functions in the methods provided in embodiments of this application, the access point link device or the station multi-link device may include a hardware structure and/or a software module, and implement the functions in a form of the hardware structure, the software module, or a combination of the hardware structure and the software module. Whether a function in the functions is performed by using the hardware structure, the software module, or the combination of the hardware structure and the software module depends on particular applications and design constraints of the technical solutions.

The following describes, with reference to the accompanying drawings, a communication apparatus configured to implement the foregoing methods in embodiments of this application. Therefore, all the foregoing content may be used in the following embodiments. Repeated content is not described again.

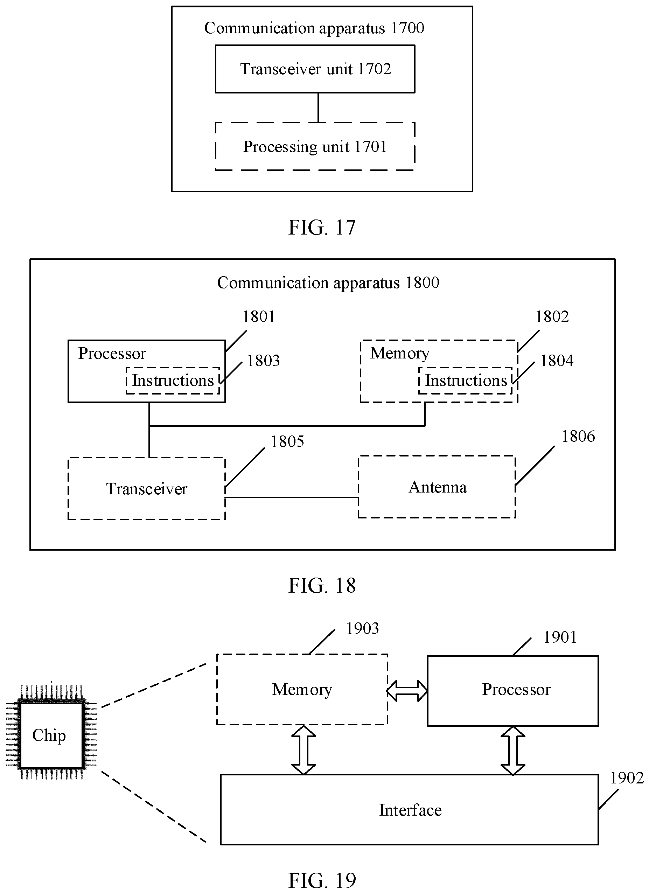

FIG. 17 is a possible representation form of the communication apparatus according to an embodiment of this application. A communication apparatus 1700 may be configured to implement functions or steps implemented by the access point link device or the station multi-link device in the foregoing method embodiments. The communication apparatus may include an optional processing unit 1701 and a transceiver unit 1702. Optionally, a storage unit may be further included. The storage unit may be configured to store instructions (code or a program) and/or data. The processing unit 1701 and the transceiver unit 1702 may be coupled to the storage unit. For example, the processing unit 1701 may read the instructions (the code or the program) and/or the data in the storage unit, to implement a corresponding method. The foregoing units may be independently disposed, or may be partially or completely integrated.

In some possible implementations, the communication apparatus 1700 can correspondingly implement behaviors and functions of the access point link device in the foregoing method embodiments. For example, the communication apparatus 1700 may be an AP MLD, or may be a component (for example, a chip or a circuit) used in an AP MLD. The transceiver unit 1702 may be configured to perform all receiving or sending operations performed by the access point link device in the foregoing embodiments, for example, S402 in embodiments shown in FIG. 4, and/or another process used to support the technology described in this specification. The processing unit 1701 is configured to perform all operations except the receiving and sending operations performed by the access point multi-link device in the foregoing embodiments, for example, generating a first PPDU in S401 in embodiments shown in FIG. 4, and/or another process used to support the technology described in this specification.

For example, the processing unit 1701 is configured to generate a first PPDU, where the first PPDU carries first indication information, and the first indication information indicates that waking up of a first access point in a doze state is allowed, or the first indication information indicates that waking up of a first access point in a doze state is not allowed; and the transceiver unit 1702 is configured to send the first PPDU through the first access point.

In an optional manner, the first indication information includes a wake-up enable field, and the wake-up enable field indicates that waking up of the first access point in the doze state is allowed, or that waking up of the first access point in the doze state is not allowed.

In an optional manner, the first indication information includes a power management mode field, and the power management mode field indicates that waking up of the first access point in the doze state is allowed, or that waking up of the first access point in the doze state is not allowed.

In an optional manner, the power management mode field further indicates the first access point to switch to an active mode, and/or the power management mode field further indicates the first access point to switch to a sleep mode.

In an optional manner, the first indication information indicates that the first access point in the doze state is allowed to be woken up.

The transceiver unit 1702 is further configured to receive a second PPDU sent by a station multi-link device, where the second PPDU carries second indication information, and the second indication information is used to wake up a first access point corresponding to one or more links.

In an optional manner, the second indication information includes a link indication field, and the link indication field indicates a link that is requested to be woken up; or the second indication information includes identifiers of a plurality of station multi-link devices and a link indication field corresponding to an identifier of each station multi-link device; or the second indication information is carried in a control field, and the control field indicates a link that is requested to be woken up.

In an optional manner, the plurality of station multi-link devices correspond to a same multicast address or a same broadcast address.

In an optional manner, the second PPDU includes a control field, and the control field carries the second indication information.

In an optional manner, the control field is an access point assistance request control field, and the access point assistance request control field carries the second indication information.

In an optional manner, the access point assistance request control field further carries third indication information, and the third indication information indicates that the access point assistance request control field is used to wake up a first access point that is in a doze state and that is in a specified access point multi-link device.

In an optional manner, the transceiver unit 1702 is further configured to send a third PPDU to the station multi-link device, where the third PPDU indicates a woken-up first access point.

In an optional manner, the transceiver unit 1702 is further configured to send a fourth PPDU to the station multi-link device on a woken-up link, where the fourth PPDU indicates that a first access point corresponding to the link is woken up.

In an optional manner, the first PPDU includes a wakeup delay field, and the wakeup delay field indicates a delay for the first access point to switch from the doze state to the awake state.

In a possible implementation, the transceiver unit 1702 is further configured to send a fifth PPDU, where the fifth PPDU includes the wakeup delay field.

In a possible implementation, the fifth PPDU further includes a power save operation field, and the power save operation field indicates whether the wakeup delay field is present.

In an optional manner, the first access point that is in a power save mode is woken up by one or more station multi-link devices.

The processing unit 1701 is further configured to: if fourth indication information sent by one or more station multi-link devices is received, and the fourth indication information is set to 0, switch the first access point from the awake state to the doze state.

In an optional manner, the fourth indication information is information indicated by a more data field.

In a possible implementation, the processing unit is further configured to: if a channel is in an idle state, switch the first access point from the awake state to the doze state.

In an optional manner, the transceiver unit 1702 is further configured to send a reduced neighbor report element, where a target beacon transmission time information set field that corresponds to the first access point and that is in the reduced neighbor report element carries a multi-link device parameters field, and a target beacon transmission time information length is set to a first length value, so that a legacy station ignores the first access point.

In an optional manner, the transceiver unit 1702 is further configured to send a reduced neighbor report element, where a target beacon transmission time information field type that corresponds to the first access point and that is in the reduced neighbor report element is set to a first type value, so that a legacy station ignores the first access point.

In an optional manner, the transceiver unit 1702 is further configured to send a sixth PPDU, where the sixth PPDU carries fifth indication information, and the fifth indication information indicates that transmission is allowed out of a service period, or that transmission is not allowed out of a service period.

In a possible implementation, the first PPDU includes a power management mode field, and the power management mode field further indicates a periodic power save mode.

In some possible implementations, the communication apparatus 1700 can correspondingly implement behaviors and functions of the station multi-link device in the foregoing method embodiments. For example, the communication apparatus 1700 may be a non-AP MLD or a STA MLD, or may be a component (for example, a chip or a circuit) used in a non-AP MLD or a STA MLD. The transceiver unit 1702 may be configured to perform all receiving or sending operations performed by the station multi-link device in the foregoing embodiments, for example, S402 in embodiments shown in FIG. 4, and/or another process used to support the technology described in this specification. The processing unit 1701 is configured to perform all operations except the receiving and sending operations performed by the station multi-link device in the foregoing embodiments, for example, determining whether to wake up the first access point, and/or another process used to support the technology described in this specification.

For example, the transceiver unit 1702 is configured to receive a first PPDU, where the first PPDU carries first indication information, and the first indication information indicates that waking up of a first access point in a doze state is allowed, or the first indication information indicates that waking up of a first access point in a doze state is not allowed; and the processing unit 1701 is configured to determine, based on the first PPDU, whether to wake up the first access point.

In an optional manner, the first indication information includes a wake-up enable field, and the wake-up enable field indicates that waking up of the first access point in the doze state is allowed, or that waking up of the first access point in the doze state is not allowed.

In an optional manner, the first indication information includes a power management mode field, and the power management mode field indicates that waking up of the first access point in the doze state is allowed, or that waking up of the first access point in the doze state is not allowed.

In an optional manner, the power management mode field further indicates the first access point to switch to an awake mode, and/or the power management mode field further indicates the first access point to switch to a doze mode.

In an optional manner, the first indication information indicates that the first access point in the doze state in a power save mode is allowed to be woken up.

The transceiver unit 1702 is further configured to send a second PPDU, where the second PPDU carries second indication information, and the second indication information is used to wake up a first access point corresponding to one or more links.

In an optional manner, the second indication information includes a link indication field, and the link indication field indicates a link that is requested to be woken up; or the second indication information includes identifiers of a plurality of station multi-link devices and a link indication field corresponding to an identifier of each station multi-link device; or the second indication information is carried in a control field, and the control field indicates a link that is requested to be woken up.

In an optional manner, the plurality of station multi-link devices correspond to a same multicast address or a same broadcast address.

In an optional manner, the second PPDU includes a control field, and the control field carries the second indication information.

In an optional manner, the control field is an access point assistance request control field, and the access point assistance request control field carries the second indication information.

In an optional manner, the access point assistance request control field further carries third indication information, and the third indication information indicates that the access point assistance request control field is used to wake up a first access point that is in a doze state and that is in a specified access point multi-link device.

In a possible implementation, the transceiver unit 1702 is further configured to receive a third PPDU, where the third PPDU indicates a woken-up first access point.

In a possible implementation, the transceiver unit 1702 is further configured to receive a fourth PPDU on a woken-up link, where the fourth PPDU indicates that a first access point corresponding to the link is woken up.

In an optional manner, the first PPDU includes a wakeup delay field, and the wakeup delay field indicates a delay for the first access point to switch from the doze state to the awake state.

In an optional manner, the transceiver unit is further configured to receive a fifth PPDU, where the fifth PPDU includes the wakeup delay field.

In an optional manner, the fifth PPDU further includes a power save operation field, and the power save operation field indicates whether the wakeup delay field is present.

In an optional manner, the first access point in the power save mode is woken up by one or more station multi-link devices; and the transceiver unit 1702 is further configured to send fourth indication information, where the fourth indication information is set to 0, and indicates the first access point to switch from the awake state to the doze state.

In an optional manner, the fourth indication information is information indicated by a more data field.

In an optional manner, the transceiver unit 1702 is further configured to: receive a reduced neighbor report element, where a target beacon transmission time information set field that corresponds to the first access point and that is in the reduced neighbor report element carries a multi-link device parameters field, and a target beacon transmission time information length is set to a first length value, so that a legacy station ignores the first access point; or receive a reduced neighbor report element, where a target beacon transmission time information field type that corresponds to the first access point and that is in the reduced neighbor report element is set to a first type value, so that a legacy station ignores the first access point.

In an optional manner, the transceiver unit 1702 is further configured to receive a sixth PPDU, where the sixth PPDU carries fifth indication information, and the fifth indication information indicates that transmission is allowed out of a service period, or that transmission is not allowed out of a service period.

In an optional manner, the first PPDU includes a power management mode field, and the power management mode field further indicates a periodic power save mode.

It should be noted that the communication apparatus 1700 may be configured to perform the foregoing method embodiments. For specific steps, descriptions, and corresponding beneficial effects, refer to the foregoing method embodiments. Details are not described herein again.

It should be understood that the processing unit 1701 in embodiments of this application may be implemented by a processor/processing circuit or a circuit component related to a processor/processing circuit, and the transceiver unit 1702 may be implemented by a transceiver/a transceiver interface, a circuit component related to a transceiver/a transceiver interface, or a communication interface.

FIG. 18 is a possible representation form of a communication apparatus according to an embodiment of this application. The communication apparatus 1800 may include a processor 1801 and a transceiver 1805, and optionally further include a memory 1802. The communication apparatus may be used as a PPDU generation and sending apparatus in this application, or may be used as a PPDU receiving apparatus in this application.

The transceiver 1805 may be referred to as a transceiver unit, a transceiver machine, a transceiver circuit, or the like, and is configured to implement a transceiver function. The transceiver 1805 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The memory 1802 may store a computer program or software code or instructions 1804, and the computer program or the software code or the instructions 1804 may also be referred to as firmware. The processor 1801 may control a MAC layer and a PHY layer by running a computer program or software code or instructions 1803 in the processor 1801, or by invoking the computer program or the software code or the instructions 1804 stored in the memory 1802, to implement a PPDU communication method provided in the following embodiments of this application. The processor 1801 may be a central processing unit (central processing unit, CPU), and the memory 1802 may be, for example, a read-only memory (read-only memory, ROM) or a random access memory (random access memory, RAM).

The processor 1801 and the transceiver 1805 that are described in this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like.

The communication apparatus 1800 may further include an antenna 1806. Modules/units included in the communication apparatus 1800 are merely examples for description. This is not limited in this application.

As described above, the communication apparatus 1800 described in the foregoing embodiments may be an AP MLD or a STA MLD. However, a scope of the communication apparatus described in this application is not limited thereto, and a structure of the communication apparatus may not be limited by FIG. 18. The AP MLD includes one or more APs, and the STA MLD includes one or more STAs.

The AP may be a multi-antenna/multi-radio frequency AP, or may be a single-antenna/single-radio frequency AP. The antenna/radio frequency AP is configured to send/receive a data packet. In an implementation, an antenna part or a radio frequency part of the AP may be separated from a main body part of the AP, and is in a remote layout structure. In an implementation, the STA may be a single antenna/radio frequency STA, or may be a multi-antenna/multi-radio frequency STA, and may be a device with more than two antennas. The antenna/radio frequency STA is configured to send/receive a data packet. In an implementation, an antenna part or a radio frequency part of the STA may be separated from a main body part of the STA, and is in a remote layout structure.

The communication apparatus in this application may alternatively be an independent device or may be a part of a large device. For example, an implementation form of the communication apparatus may be:
(1) an independent integrated circuit IC, chip, chip system, or chip subsystem; (2) a set with one or more ICs, where optionally, the IC set may also include a storage component configured to store data or instructions; (3) a module that can be embedded in another device; (4) a receiver, an intelligent terminal, a wireless device, a handset, a mobile unit, a vehicle-mounted device, a cloud device, an artificial intelligence device, or the like; or (5) others or the like.

For a case in which the implementation form of the communication apparatus is a chip or a chip system, refer to a diagram of a structure of a chip shown in FIG. 19. The chip shown in FIG. 19 includes a processor 1901 and an interface 1902. There may be one or more processors 1901, and there may be a plurality of interfaces 1902. The interface 1902 is configured to receive and send signals. Optionally, the chip or the chip system may include a memory 1903. The memory 1903 is configured to store program instructions and data that are necessary for the chip or the chip system.

In addition, embodiments of this application do not limit the protection scope and applicability of the claims. Persons skilled in the art may make adaptive changes to functions and deployments of elements in this application, or may omit, replace, or add various processes or components as appropriate without departing from the scope of embodiments of this application.

An embodiment of this application further provides a computer-readable storage medium. The computer-readable storage medium stores a computer program; and when the computer-readable storage medium is executed by a computer, functions of the foregoing method embodiments are implemented.

An embodiment of this application further provides a computer program product. When the computer program product is executed by a computer, functions of the foregoing method embodiments are implemented.

An embodiment of this application further provides a chip system. The chip system includes a processor and an interface, and is configured to support a communication transmission device in implementing a function related to an access point or a station in the foregoing method embodiments, for example, determining or processing at least one of data and information in the foregoing methods. In a possible design, the chip system further includes a memory. The memory is configured to store necessary information and data of the communication apparatus. The chip system may include a chip, or may include a chip and another discrete component.

An embodiment of this application provides a functional entity, and the functional entity is configured to implement the foregoing communication methods.

An embodiment of this application provides a communication system. The communication system includes an access point multi-link device and a station multi-link device that implement the foregoing communication methods.

It should be understood that sequence numbers of the processes do not mean execution sequences in various embodiments of this application. The execution sequences of the processes need to be determined according to functions and internal logic of the processes, and should not be construed as any limitation on the implementation processes of embodiments of this application.

Persons of ordinary skill in the art may be aware that, in combination with the examples described in embodiments disclosed in this specification, units and algorithm steps may be implemented by electronic hardware or a combination of computer software and electronic hardware. Whether the functions are performed by the hardware or the software depends on a particular application and a design constraint condition of a technical implementation. Persons skilled in the art may use different methods to implement the described functions of each particular application, but it should not be considered that the implementation goes beyond the scope of this application.

It may be clearly understood by persons skilled in the art that, for convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the implementations of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical implementations of this application essentially, or the part contributing to the conventional technology, or some of the technical implementations may be implemented in a form of a software product. The computer software product is stored in a storage medium, and includes several instructions for instructing a computer device (which may be a personal computer, a server, a network device, or the like) to perform all or some of the steps of the method described in embodiments of this application. The storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the methods in embodiments of this application may be adjusted, combined, or removed based on an actual requirement.

The modules/units in the apparatus in embodiments of this application may be combined, divided, and deleted based on an actual requirement.

"And/or" in this application describes an association relationship for describing associated objects and represents that three relationships may exist. For example, A and/or B may represent the following three cases: Only A exists, both A and B exist, and only B exists. The character "/" generally represents an "or" relationship between the associated objects. In this application, "at least one" means one or more, and "a plurality of" means two or more. In addition, it should be understood that, in the descriptions of this application, terms such as "first" and "second" are merely used for distinguishing and description, cannot be understood as an indication or implication of relative importance, and cannot be understood as an indication or implication of a sequence.

In addition, in this application, unless otherwise specified, for same or similar parts in embodiments, refer to each other. In embodiments of this application and the implementations/methods/implementation methods in embodiments, unless otherwise specified or a logical collision occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features.

The foregoing embodiments are merely intended for describing the technical implementations of this application, but not for limiting this application. Although this application is described in detail with reference to the foregoing embodiments, persons of ordinary skill in the art should understand that they may still make modifications to the technical implementations described in the foregoing embodiments or make equivalent replacements to some technical features thereof, without departing from the scope of the technical implementations of embodiments of this application.

## Claims

1. A communication method, comprising:
generating, by an access point multi-link device, a first physical layer protocol data unit PPDU, wherein the first PPDU carries first indication information, and the first indication information indicates that waking up of a first access point in a doze state is allowed, or the first indication information indicates that waking up of a first access point in a doze state is not allowed; and
sending, by the access point multi-link device, the first PPDU.

2. The method according to claim 1, wherein
the first indication information comprises a wake-up enable field, and the wake-up enable field indicates that waking up of the first access point in the doze state is allowed, or that waking up of the first access point in the doze state is not allowed; or
the first indication information comprises a power management mode field, and the power management mode field indicates that waking up of the first access point in the doze state is allowed, or that waking up of the first access point in the doze state is not allowed.

3. The method according to claim 2, wherein the power management mode field further indicates that the first access point is in an active mode, and/or the power management mode field further indicates that the first access point is in a sleep mode.

4. The method according to any one of claims 1 to 3, wherein the first indication information indicates that waking up of the first access point in the doze state is allowed; and
after the access point multi-link device sends the first PPDU through the first access point, the method further comprises:
receiving, by the access point multi-link device, a second PPDU sent by a station multi-link device, wherein the second PPDU carries second indication information, and the second indication information is used to wake up a first access point corresponding to one or more links.

5. The method according to claim 4, wherein the second PPDU comprises an access point assistance request control field, and the access point assistance request control field carries the second indication information.

6. The method according to claim 5, wherein the access point assistance request control field further carries third indication information, and the third indication information indicates that the access point assistance request control field is used to wake up a first access point in a specified access point multi-link device.

7. The method according to any one of claims 4 to 6, wherein the method further comprises:
sending, by the access point multi-link device, a third PPDU to the station multi-link device, wherein the third PPDU indicates a woken-up first access point; or
sending, by the access point multi-link device, a fourth PPDU to the station multi-link device on a woken-up link, wherein the fourth PPDU indicates that a first access point corresponding to the link is woken up.

8. The method according to any one of claims 4 to 6, wherein the method further comprises:
sending, by the access point multi-link device, a fifth PPDU, wherein the fifth PPDU comprises a wakeup delay field, and the wakeup delay field indicates a delay for the first access point to switch to an awake state.

9. The method according to claim 8, wherein the fifth PPDU further comprises a power save operation support field, and the power save operation support field indicates whether the wakeup delay field is present.

10. The method according to any one of claims 4 to 9, wherein the first access point that is in a power save mode is woken up by one or more station multi-link devices; and
the method further comprises:
if fourth indication information sent by the one or more station multi-link devices is received, and the fourth indication information is set to 0, switching, by the first access point of the access point multi-link device, from the awake state to the doze state; or
if a channel is in an idle state, switching, by the first access point of the access point multi-link device, from the awake state to the doze state.

11. The method according to claim 10, wherein the fourth indication information is information indicated by a more data field.

12. The method according to any one of claims 1 to 11, wherein the method further comprises:
sending, by the access point multi-link device, a reduced neighbor report element, wherein a target beacon transmission time information set field that corresponds to the first access point and that is in the reduced neighbor report element carries a multi-link device parameters field, and a target beacon transmission time information length is set to a first length value, so that a legacy station ignores the first access point; or
sending, by the access point multi-link device, a reduced neighbor report element, wherein a target beacon transmission time information field type that corresponds to the first access point and that is in the reduced neighbor report element is set to a first type value, so that a legacy station ignores the first access point.

13. The method according to any one of claims 1 to 12, wherein the method further comprises:
sending, by the access point multi-link device, a sixth PPDU, wherein the sixth PPDU carries fifth indication information, and the fifth indication information indicates that transmission is allowed out of a service period, or that transmission is not allowed out of a service period; and/or
the first PPDU comprises a power management mode field, and the power management mode field further indicates a periodic power save mode.

14. A communication method, comprising:
receiving, by a station multi-link device, a first physical layer protocol data unit PPDU, wherein the first PPDU carries first indication information, and the first indication information indicates that waking up of a first access point in a doze state is allowed, or the first indication information indicates that waking up of a first access point in a doze state is not allowed; and
determining, by the station multi-link device, whether to wake up the first access point.

15. The method according to claim 14, wherein the first indication information comprises a wake-up enable field, and the wake-up enable field indicates that waking up of the first access point in the doze state is allowed, or that waking up of the first access point in the doze state is not allowed; or
the first indication information comprises a power management mode field, and the power management mode field indicates that waking up of the first access point in the doze state is allowed, or that waking up of the first access point in the doze state is not allowed.

16. The method according to claim 15, wherein the power management mode field further indicates the first access point to switch to an awake mode, and/or the power management mode field further indicates the first access point to switch to a doze mode.

17. The method according to any one of claims 14 to 16, wherein the first indication information indicates that waking up of the first access point in the doze state is allowed; and
after the determining, by the station multi-link device, whether to wake up the first access point, the method further comprises:
sending, by the station multi-link device, a second PPDU, wherein the second PPDU carries second indication information, and the second indication information is used to wake up a first access point corresponding to one or more links.

18. The method according to claim 17, wherein the second PPDU comprises an access point assistance request control field, and the access point assistance request control field carries the second indication information.

19. The method according to claim 18, wherein the access point assistance request control field further carries third indication information, and the third indication information indicates that the access point assistance request control field is used to wake up a first access point in a specified access point multi-link device.

20. The method according to any one of claims 17 to 19, wherein the method further comprises:
receiving, by the station multi-link device, a third PPDU, wherein the third PPDU indicates a woken-up first access point; or
receiving, by the station multi-link device, a fourth PPDU on a woken-up link, wherein the fourth PPDU indicates that a first access point corresponding to the link is woken up.

21. The method according to any one of claims 17 to 19, wherein the method further comprises:
receiving, by the station multi-link device, a fifth PPDU, wherein the fifth PPDU comprises a wakeup delay field, and the wakeup delay field indicates a delay for the first access point to switch to an awake state.

22. The method according to claim 21, wherein the fifth PPDU further comprises a power save operation support field, and the power save operation support field indicates whether the wakeup delay field is present.

23. The method according to any one of claims 17 to 22, wherein the first access point that is in a power save mode is woken up by one or more station multi-link devices; and
the method further comprises:
sending, by the station multi-link device, fourth indication information, wherein the fourth indication information is set to 0, and indicates the first access point to switch from the awake state to the doze state.

24. The method according to claim 23, wherein the fourth indication information is information indicated by a more data field.

25. The method according to any one of claims 14 to 24, wherein the method further comprises:
receiving, by the station multi-link device, a reduced neighbor report element, wherein a target beacon transmission time information set field that corresponds to the first access point and that is in the reduced neighbor report element carries a multi-link device parameters field, and a target beacon transmission time information length is set to a first length value, so that a legacy station ignores a first link; or
receiving, by the station multi-link device, a reduced neighbor report element, wherein a target beacon transmission time information set field that corresponds to the first access point and that is in the reduced neighbor report element carries a target beacon transmission time information field type, and the target beacon transmission time information field type is set to a first type value, so that a legacy station ignores a first link.

26. The method according to any one of claims 14 to 25, wherein the method further comprises:
receiving, by the station multi-link device, a sixth PPDU, wherein the sixth PPDU carries fifth indication information, and the fifth indication information indicates that transmission is allowed out of a service period, or that transmission is not allowed out of a service period; and/or
the first PPDU comprises a power management mode field, and the power management mode field further indicates a periodic power save mode.

27. A communication apparatus, comprising a processing unit and a transceiver unit, wherein
the processing unit is configured to generate a first physical layer protocol data unit PPDU, wherein the first PPDU carries first indication information, and the first indication information indicates that waking up of a first access point in a doze state is allowed, or the first indication information indicates that waking up of a first access point in a doze state is not allowed; and
the transceiver unit is configured to send the first PPDU.

28. The apparatus according to claim 27, wherein
the first indication information comprises a wake-up enable field, and the wake-up enable field indicates that waking up of the first access point in the doze state is allowed, or that waking up of the first access point in the doze state is not allowed; or
the first indication information comprises a power management mode field, and the power management mode field indicates that waking up of the first access point in the doze state is allowed, or that waking up of the first access point in the doze state is not allowed.

29. The apparatus according to claim 28, wherein the power management mode field further indicates that the first access point is in an active mode, and/or the power management mode field further indicates that the first access point is in a sleep mode.

30. The apparatus according to any one of claims 27 to 29, wherein the first indication information indicates that waking up of the first access point in the doze state is allowed; and
the transceiver unit is further configured to receive a second PPDU sent by a station multi-link device, wherein the second PPDU carries second indication information, and the second indication information is used to wake up a first access point corresponding to one or more links.

31. The apparatus according to claim 30, wherein the second PPDU comprises an access point assistance request control field, and the access point assistance request control field carries the second indication information.

32. The apparatus according to claim 31, wherein the access point assistance request control field further carries third indication information, and the third indication information indicates that the access point assistance request control field is used to wake up a first access point in a specified access point multi-link device.

33. The apparatus according to any one of claims 30 to 32, wherein the transceiver unit is further configured to: send a third PPDU to the station multi-link device, wherein the third PPDU indicates a woken-up first access point; or send a fourth PPDU to the station multi-link device on a woken-up link, wherein the fourth PPDU indicates that a first access point corresponding to the link is woken up.

34. The apparatus according to any one of claims 30 to 32, wherein the transceiver unit is further configured to send a fifth PPDU, wherein the fifth PPDU comprises a wakeup delay field, and the wakeup delay field indicates a delay for the first access point to switch to an awake state.

35. The apparatus according to claim 34, wherein the fifth PPDU further comprises a power save operation support field, and the power save operation support field indicates whether the wakeup delay field is present.

36. The apparatus according to any one of claims 30 to 35, wherein the first access point that is in a power save mode is woken up by one or more station multi-link devices; and
the processing unit is further configured to: if fourth indication information sent by the one or more station multi-link devices is received, and the fourth indication information is set to 0, switch the first access point of the communication apparatus from the awake state to the doze state; or if a channel is in an idle state, switch the first access point of the communication apparatus from the awake state to the doze state.

37. The apparatus according to claim 36, wherein the fourth indication information is information indicated by a more data field.

38. The apparatus according to any one of claims 27 to 37, wherein the transceiver unit is further configured to: send a reduced neighbor report element, wherein a target beacon transmission time information set field that corresponds to the first access point and that is in the reduced neighbor report element carries a multi-link device parameters field, and a target beacon transmission time information length is set to a first length value, so that a legacy station ignores the first access point; or send a reduced neighbor report element, wherein a target beacon transmission time information field type that corresponds to the first access point and that is in the reduced neighbor report element is set to a first type value, so that a legacy station ignores the first access point.

39. The apparatus according to any one of claims 27 to 38, wherein the transceiver unit is further configured to send a sixth PPDU, wherein the sixth PPDU carries fifth indication information, and the fifth indication information indicates that transmission is allowed out of a service period, or that transmission is not allowed out of a service period; and/or
the first PPDU comprises a power management mode field, and the power management mode field further indicates a periodic power save mode.

40. A communication apparatus, comprising a processing unit and a transceiver unit, wherein
the transceiver unit is configured to receive a first physical layer protocol data unit PPDU, wherein the first PPDU carries first indication information, and the first indication information indicates that waking up of a first access point in a doze state is allowed, or the first indication information indicates that waking up of a first access point in a doze state is not allowed; and
the processing unit is configured to determine whether to wake up the first access point.

41. The apparatus according to claim 40, wherein the first indication information comprises a wake-up enable field, and the wake-up enable field indicates that waking up of the first access point in the doze state is allowed, or that waking up of the first access point in the doze state is not allowed; or
the first indication information comprises a power management mode field, and the power management mode field indicates that waking up of the first access point in the doze state is allowed, or that waking up of the first access point in the doze state is not allowed.

42. The apparatus according to claim 41, wherein the power management mode field further indicates the first access point to switch to an awake mode, and/or the power management mode field further indicates the first access point to switch to a doze mode.

43. The apparatus according to any one of claims 40 to 42, wherein the first indication information indicates that waking up of the first access point in the doze state is allowed; and
the transceiver unit is further configured to send a second PPDU, wherein the second PPDU carries second indication information, and the second indication information is used to wake up a first access point corresponding to one or more links.

44. The apparatus according to claim 43, wherein the second PPDU comprises an access point assistance request control field, and the access point assistance request control field carries the second indication information.

45. The apparatus according to claim 44, wherein the access point assistance request control field further carries third indication information, and the third indication information indicates that the access point assistance request control field is used to wake up a first access point in a specified access point multi-link device.

46. The apparatus according to any one of claims 43 to 45, wherein the transceiver unit is further configured to: receive a third PPDU, wherein the third PPDU indicates a woken-up first access point; or receive a fourth PPDU on a woken-up link, wherein the fourth PPDU indicates that a first access point corresponding to the link is woken up.

47. The apparatus according to any one of claims 43 to 45, wherein the transceiver unit is further configured to receive a fifth PPDU, wherein the fifth PPDU comprises a wakeup delay field, and the wakeup delay field indicates a delay for the first access point to switch to an awake state.

48. The apparatus according to claim 47, wherein the fifth PPDU further comprises a power save operation support field, and the power save operation support field indicates whether the wakeup delay field is present.

49. The apparatus according to any one of claims 43 to 48, wherein the first access point that is in a power save mode is woken up by one or more station multi-link devices; and
the transceiver unit is further configured to send fourth indication information, wherein the fourth indication information is set to 0, and indicates the first access point to switch from the awake state to the doze state.

50. The apparatus according to claim 49, wherein the fourth indication information is information indicated by a more data field.

51. The apparatus according to any one of claims 40 to 50, wherein the transceiver unit is further configured to: receive a reduced neighbor report element, wherein a target beacon transmission time information set field that corresponds to the first access point and that is in the reduced neighbor report element carries a multi-link device parameters field, and a target beacon transmission time information length is set to a first length value, so that a legacy station ignores a first link; or receive a reduced neighbor report element, wherein a target beacon transmission time information set field that corresponds to the first access point and that is in the reduced neighbor report element carries a target beacon transmission time information field type, and the target beacon transmission time information field type is set to a first type value, so that a legacy station ignores a first link.

52. The apparatus according to any one of claims 40 to 51, wherein the transceiver unit is further configured to receive a sixth PPDU, wherein the sixth PPDU carries fifth indication information, and the fifth indication information indicates that transmission is allowed out of a service period, or that transmission is not allowed out of a service period; and/or
the first PPDU comprises a power management mode field, and the power management mode field further indicates a periodic power save mode.

53. A communication apparatus, comprising a processor, wherein the processor is coupled to a memory;
the memory is configured to store a computer program; and
the processor is configured to execute the computer program stored in the memory, so that the apparatus performs the method according to any one of claims 1 to 13.

54. A communication apparatus, comprising a processor, wherein the processor is coupled to a memory;
the memory is configured to store a computer program; and
the processor is configured to execute the computer program stored in the memory, so that the apparatus performs the method according to any one of claims 14 to 26.

55. A computer-readable storage medium, comprising a computer program, wherein when the computer program is run on a computer, the method according to any one of claims 1 to 26 is performed.

56. A computer program product, comprising a computer program, wherein when the computer program is run on a computer, the method according to any one of claims 1 to 26 is performed.

57. A communication system, comprising an access point multi-link device configured to perform the method according to any one of claims 1 to 13, and a station multi-link device configured to perform the method according to any one of claims 14 to 26.

58. A chip system, wherein the chip system comprises:
a processor and a memory, wherein the processor is coupled to the memory, the memory is configured to store a program or instructions, and when the program or the instructions are executed by the processor, the method according to any one of claims 1 to 26 is implemented.
